# EUROPÄISCHE PATENTSCHRIFT

(11) **EP 3 167 130 B1**
(45) Veröffentlichungstag und Bekanntmachung des Hinweises auf die Patenterteilung: **12.02.2020**
(21) Anmeldenummer: 15741503.5
(22) Anmeldetag: 25.06.2015
(51) Int. Cl.: E05B 17/00, E05C 3/04, E05C 1/14

(54) **MANUELL ZU BETÄTIGENDE VERSCHLUSSVORRICHTUNG MIT VERZÖGERUNGSEINRICHTUNG**
HAND-ACTUATED CLOSING DEVICE WITH A DELAYING SYSTEM
DISPOSITIF DE FERMETURE À ACTIONNEMENT MANUEL AVEC SYSTÈME DE TEMPORISATION

(30) Priorität: 09.07.2014 DE 102014213383
(43) Veröffentlichungstag der Anmeldung: 17.05.2017
(73) Patentinhaber: Fidlock GmbH, 30175 Hannover (DE)
(72) Erfinder: FIEDLER, Joachim, 30175 Hannover (DE); BOTKUS, Breido, 30175 Hannover (DE); SOMMER, Laurentius, 30173 Hannover (DE)
(74) Vertreter: Maikowski & Ninnemann Patentanwälte Partnerschaft mbB
(86) Internationale Anmeldenummer: PCT/EP2015/064420
(87) Internationale Veröffentlichungsnummer: WO 2016/005203

(56) Entgegenhaltungen:
- DE-A1- 10 036 945
- DE-B- 1 086 584
- GB-A- 2 461 107
- US-A- 2 718 420

## Beschreibung

Die Erfindung betrifft eine manuell zu betätigende Verschlussvorrichtung nach dem Oberbegriff des Anspruchs 1.

Eine derartige Verschlussvorrichtung umfasst zwei Verschlussteile, die entlang einer Schließrichtung aneinander ansetzbar und in einer Schließstellung mechanisch miteinander verbunden sind. Durch Lösen der mechanischen Verbindung können die Verschlussteile voneinander gelöst werden, um auf diese Weise die Verschlussvorrichtung zu öffnen.

Eines der Verschlussteile umfasst ein Gehäuse und ein bewegbar an dem Gehäuse angeordnetes Verriegelungselement, das zum Herstellen der mechanischen Verbindung zwischen den Verschlussteilen in der Schließstellung formschlüssig, kraftschlüssig, reibschlüssig oder auf andere Weise mit dem anderen Verschlussteil in Verbindung steht. Das Verriegelungselement nimmt hierbei in der Schließstellung, in der die Verschlussteile der Verschlussvorrichtung mechanisch miteinander verbunden sind, eine erste Stellung an dem Gehäuse ein und kann aus der ersten Stellung heraus durch manuelle Betätigung in eine zweite Stellung bewegt werden, um die Verschlussteile voneinander zu lösen. In der zweiten Stellung ist die Verbindung mit dem anderen Verschlussteil aufgehoben und somit die mechanische Verbindung zwischen den Verschlussteilen gelöst, so dass die Verschlussteile voneinander entnommen werden können.

Um das Verriegelungselement in seine erste Stellung zurückzustellen, wirkt eine Rückstellkraft in Richtung der ersten Stellung. Durch Rückstellen des Verriegelungselements in die erste Stellung kann sichergestellt werden, dass die Verschlussteile beim Ansetzen aneinander zum Schließen der Verschlussvorrichtung miteinander verriegeln können.

Eine solche Verschlussvorrichtung kann beispielsweise bei einem Kinderwagen zum Einsatz kommen. Bei solch einem Kinderwagen kann ein Aufsatz, in dem ein Kind sitzen oder liegen kann, über eine oder mehrere Verschlussvorrichtungen mit einem Untergestell verbunden sein, wobei durch Lösen der Verschlussvorrichtungen der Aufsatz von dem Untergestell abgenommen werden kann.

Ist beispielsweise an zwei Seiten an einem Kinderwagen jeweils eine Verschlussvorrichtung vorgesehen, so kann erforderlich sein, zum Abnehmen des Aufsatzes beide Verschlussvorrichtungen geleichzeitig zu öffnen. Dies ist in der Regel nur mit beiden Händen möglich, weil sichergestellt sein muss, dass sich beide Verschlussvorrichtungen gleichzeitig in einer nicht verriegelten, geöffneten Stellung befinden. Dies kann umständlich und insbesondere bei Kinderwagen nicht ganz einfach sein, weil unter Umständen nicht beide Hände frei benutzbar sind, wenn andere Gegenstände im Arm getragen werden oder ein Kind vor Abnehmen des Aufsatzes aus dem Kinderwagen zu entnehmen ist.

Herkömmliche Verschlussvorrichtungen schnappen nach dem Öffnen selbsttätig wieder zu, was den Vorteil mit sich bringt, dass ein sicheres Schließen der Verschlussvorrichtungen beispielsweise bei Anbringen eines Aufsatzes auf einem Untergestell eines Kinderwagens gewährleistet werden kann, gleichzeitig aber den Nachteil hat, dass ein einhändiges Öffnen der Verschlussvorrichtungen nacheinander nicht möglich ist.

Ein einhändiges Öffnen mehrerer Verschlussvorrichtungen an einem Kinderwagen kann zwar beispielsweise dadurch ermöglicht werden, dass die Verschlussvorrichtungen nach dem Öffnen nicht selbsttätig wieder schließen und somit ein Öffnen mehrerer Verschlussvorrichtungen nacheinander möglich ist. Dies bringt aber den Nachteil mit sich, dass die Verschlussvorrichtungen nach dem Aufsetzen des Aufsatzes auf das Untergestell auch händisch wieder geschlossen werden müssen. Wird dies vergessen, so ist ein sicherer Halt des Aufsatzes an dem Untergestell unter Umständen nicht gewährleistet.

Es besteht ein Bedürfnis nach Verschlussvorrichtungen, die vielseitig einsetzbar, komfortabel zu schließen und insbesondere auch komfortabel zu öffnen sind. Es besteht insbesondere ein Bedürfnis nach Verschlussvorrichtungen, die in Kombination eingesetzt werden können und dennoch in einfacher, komfortabler Weise auch einhändig betätigt werden können.

Bei einem aus der US 7,775,567 bekannten Magnetverschluss zum Verschließen eines Laptop-Computers ist ein Magnetelement an einen Deckel des Laptop-Computers in einer Schließstellung einem gegenpoligen Magnetelement an einem Gehäusekörper des Laptop-Computers zugewandt. Aus der Schließstellung heraus kann das Magnetelement des Deckels in eine geöffnete Stellung verstellt werden, wobei ein federelastisches Sperrelement vorgesehen sein kann, das eine Rückkehr des Magnetelements in die Schließstellung verhindert.

Aus der GB 2 486 813 A ist ein Kinderwagen mit einem abnehmbaren Sitz bekannt, der in angesetzter Stellung mit einem Untergestell des Kinderwagens mechanisch verrastet ist.

Aus der EP 1 291 260 B1 ist ein Kinderwagen bekannt, bei dem ein Sensor vorgesehen ist, um einen Alarm zu erzeugen, wenn ein Aufsatz mit einem Untergestell nicht vollständig verriegelt ist.

Die GB 2461107 A beschreibt eine Einrichtung, die eine Bewegung eines Schiebefensters beschränken soll und dazu ein Hinderniselement aufweist, das zu einem Gehäuse bewegbar ist.

Die US 2,718,420 beschreibt einen Riegelmechanismus für eine Schwenktür, bei der eine Klinke zum Verriegeln mit einem Türrahmen bewegbar ist.

Die DE 1 086 584 B beschreibt einen Türverschluss mit einer mittels eines Türdrückers in einer Türebene schwenkbaren Falle.

Aufgabe der vorliegenden Erfindung ist es, eine Verschlussvorrichtung zur Verfügung zu stellen, die auf einfache Weise bedient, insbesondere geöffnet und geschlossen werden kann und in der Schließstellung eine sichere Verriegelung zur Verfügung stellt.

Diese Aufgabe wird durch einen Gegenstand mit den Merkmalen des Anspruchs 1 gelöst.

Demnach umfasst die Verschlussvorrichtung eine Verzögerungseinrichtung, die ausgebildet ist, das Rückstellen des Verriegelungselements aus der zweiten Stellung in die erste Stellung bei einer wirkenden Rückstellkraft derart zu verzögern, dass das Verriegelungselement erst nach Ablauf einer vorbestimmten Verzögerungszeit zurück in die erste Stellung gelangt, wobei die Verschlussteile jeweils mindestens ein Magnetelement aufweisen, wobei die Magnetelemente das Ansetzen der Verschlussteile zum Schließen der Verschlussvorrichtung magnetisch unterstützen.

Die vorliegende Erfindung geht von dem Gedanken aus, ein Rückstellen des Verriegelungselements in die der Schließstellung entsprechende, erste Stellung nur in verzögerter Weise zu ermöglichen. Nach dem Öffnen der Verschlussvorrichtung verbleibt das Verriegelungselement somit für eine vorbestimmte Zeit in geöffneter, zweiter Stellung, in der die Verbindung mit dem anderen Verschlussteil aufgehoben und die Verschlussvorrichtung somit geöffnet ist.

Dadurch, dass die Verschlussvorrichtung nach dem Öffnen aufgrund der Verzögerung der Rückstellbewegung des Verriegelungselements nicht sofort wieder schließt, wird möglich, mehrere Verschlussvorrichtungen in einfacher, komfortabler Weise nacheinander zu betätigen. Werden beispielsweise mehrere Verschlussvorrichtungen zum Koppeln eines Kinderwagenaufsatzes mit einem Untergestell eines Kinderwagens verwendet, so kann zunächst händisch eine erste Verschlussvorrichtung und sodann eine zweite Verschlussvorrichtung geöffnet werden, um den Aufsatz von dem Untergestell zu entnehmen. Dies ist in einfacher, komfortabler Weise einhändig möglich, weil die Verschlussvorrichtungen nach dem Öffnen zumindest für eine vorbestimmte Verzögerungszeit in der geöffneten Stellung verbleiben.

Das Rückstellen des Verriegelungselements wird bei wirkender Rückstellkraft verzögert. Verbleiben nach dem Überführen des Verriegelungselements in die zweite Stellung zum Öffnen der Verschlussvorrichtung die Verschlussteile (zunächst) in ihrer der Schließstellung entsprechenden Stellung, so wirkt die Rückstellkraft zum Rückstellen des Verriegelungselements in Richtung der ersten Stellung. Diese Rückstellung wird jedoch durch die Verzögerungseinrichtung verzögert, beispielsweise indem das Verriegelungselement gebremst oder erst nach einer vorbestimmten Zeit freigegeben wird, so dass das Verriegelungselement erst nach Ablauf der vorbestimmten Verzögerungszeit zurück in die erste Stellung gelangt und die Verschlussvorrichtung somit wieder verriegelt.

Die vorbestimmte Verzögerungszeit, vor Ablauf derer das Verriegelungselement nicht zurück in die der Schließstellung entsprechende, erste Stellung gelangen kann, kann beispielsweise mehrere Sekunden, z. B. zwischen 10 s und 30 s, beispielsweise 20 s, oder auch mehrere Minuten, beispielsweise 2 min., betragen. Grundsätzlich kann die Verzögerungszeit durch Dimensionierung und Konfigurierung der Verzögerungseinrichtung frei eingestellt und den Bedürfnissen der Verwendung der Verschlussvorrichtung angepasst werden.

Das Rückstellen des Verriegelungselements erfolgt vorzugsweise selbsttätig aufgrund einer beispielsweise federmechanisch oder magnetisch bereitgestellten Rückstellkraft. Die Verzögerungseinrichtung ist hierbei ausgebildet, das Verriegelungselement derart zu verzögern, dass das Verriegelungselement erst nach Ablauf der Verzögerungszeit die erste Stellung erreicht. Die Verzögerungseinrichtung setzt der wirkenden Rückstellkraft somit eine Verzögerungs- bzw. Bremskraft entgegen, die das Rückstellen des Verriegelungselementes verzögert.

Die Verzögerungseinrichtung kann beispielsweise pneumatisch, hydraulisch, elektrisch oder elektromagnetisch wirken.

Eine elektrische Verzögerungseinrichtung kann beispielsweise elektrisch geladene Kondensatorplatten verwenden, die zur Bereitstellung einer Verzögerung elektrisch aufgeladen werden und eine elektrostatische Bremskraft bereitstellen, die eine vorbestimmte Verzögerung bewirkt.

Eine elektromagnetische Verzögerungseinrichtung kann beispielsweise einen Elektromagneten verwenden, der für eine vorbestimmte Verzögerungszeit eine magnetische Verzögerungskraft bereitstellt. Ein solcher Elektromagnet kann beispielsweise über eine Elektronik oder einen geeigneten Kondensator zum Bereitstellen einer Verzögerungskraft bestromt werden.

Denkbar ist auch eine Verzögerungseinrichtung, die sich die Induzierung eines Wirbelstroms bei Bewegung eines elektrisch leitfähigen Bauteils in einem Magnetfeld zunutze macht.

Insbesondere bei elektrischen oder elektromagnetischen Verzögerungseinrichtungen, aber auch bei anderen Verzögerungseinrichtungen, kann vorgesehen sein, dass die Verzögerungseinrichtung eine Bremskraft bereitstellt, die das Rückstellen durch Verlangsamung der Bewegung des Verriegelungselements verzögert. In diesem Fall wird das Verriegelungselement während der Verzögerungszeit kontinuierlich in verlangsamter Weise zurückgestellt und erreicht seine erste Stellung erst nach Ablauf der Verzögerungszeit.

Alternativ ist auch möglich, dass die Verzögerungseinrichtung das Rückstellen während der vorbestimmten Verzögerungszeit beispielsweise in elektronisch gesteuerter Weise sperrt und das Verriegelungselement auf diese Weise in der zweiten Stellung hält. Nach Ablauf der Verzögerungszeit wird das Verriegelungselement dann freigegeben und kann in Richtung der ersten Stellung zurückgestellt werden.

Bei pneumatischer oder hydraulischer Ausgestaltung der Verzögerungseinrichtung kann die Verzögerungseinrichtung beispielsweise ein erstes Bauteil und zweites Bauteil aufweisen, die relativ zueinander verstellbar sind und zusammen zumindest in der zweiten Stellung des Verriegelungselements einen Raum einschließen. Bei Bewegung des Verriegelungselements werden die Bauteile der Verzögerungseinrichtung zueinander bewegt, so dass sich das Volumen des zwischen den Bauteilen eingeschlossenen Raums verändert. Ist das Volumen des Raums in der zweiten Stellung des Verriegelungselements klein und vergrößert sich das Volumen des Raums bei Rückstellen des Verriegelungselements in Richtung der ersten Stellung, so wird in dem Raum eine Unterdruckkraft bewirkt, die eine Bewegung des Verriegelungselements in Richtung der ersten Stellung bremst und die Bewegung somit verzögert.

Grundsätzlich sind auch andere Arten von Verzögerungseinrichtungen denkbar und möglich. Beispielsweise kann die Verzögerungseinrichtung auch als mechanische Bremseinrichtung, bei der Bauteile bremsend aneinander reiben, ausgebildet sein.

Die Verschlussteile weisen erfindungsgemäß jeweils mindestens ein Magnetelement auf. Die Magnetelemente der Verschlussteile dienen dazu, das Ansetzen der Verschlussteile zum Schließen der Verschlussvorrichtung magnetisch zu unterstützen. Auf diese Weise kann eine Verschlussvorrichtung bereitgestellt werden, die in besonders einfacher, haptisch angenehmer Weise geschlossen werden kann. So müssen zum Schließen der Verschlussvorrichtung die Verschlussteile lediglich (ungefähr) aneinander angesetzt werden. Aufgrund der magnetischen Anziehungskraft zwischen den Magnetelementen erfolgt dann das Schließen in unterstützter oder gar - bei geeigneter Dimensionierung der Magnetelemente - weitgehend selbsttätiger Weise, indem die Verschlussteile unter Herstellung der mechanischen Verbindung in Eingriff miteinander gezogen werden.

Ein Magnetelement in diesem Sinne kann beispielsweise durch einen Permanentmagnet ausgebildet sein. So ist denkbar, dass an jedem Verschlussteil mindestens ein Permanentmagnet angeordnet ist. Denkbar und möglich ist aber auch, dass an einem Verschlussteil ein Permanentmagnet und an dem anderen Verschlussteil ein magnetischer Anker in Form eines aus einem ferromagnetischen Material hergestellten Bauelements angeordnet ist.

In einer konkreten Ausgestaltung kann ein Magnetelement zum Unterstützen des Schließens der Verschlussvorrichtung beispielsweise an dem Verriegelungselement oder an einem beim Bewegen des Verriegelungselements mitbewegten Bauteil des das Verriegelungselement aufweisenden Verschlussteils angeordnet sein. Eine das Schließen unterstützende magnetische Anziehungskraft wirkt somit zwischen dem Verriegelungselement und dem anderen Verschlussteil oder zwischen dem bei Bewegen des Verriegelungselements mitbewegten Bauteil und dem anderen Verschlussteil. Auf diese Weise kann sichergestellt werden, dass die Verriegelung zwischen dem anderen Verschlussteil und dem Verriegelungselement bei Schließen der Verschlussvorrichtung in zuverlässiger Weise hergestellt wird.

Zudem kann auf diese Weise erreicht werden, dass das Öffnen der Verschlussvorrichtung in besonders angenehmer Weise erfolgen kann. So kann vorgesehen sein, dass das Verriegelungselement zum Öffnen der Verschlussvorrichtung in eine von der Schließrichtung unterschiedliche Öffnungsrichtung zu bewegen ist. Die Öffnungsrichtung kann beispielsweise quer oder schräg zur Schließrichtung gerichtet sein. Bei Bewegung des Verriegelungselements in die Öffnungsrichtung wird dann auch das an dem Verriegelungselement angeordnete Magnetelement bzw. das bei Bewegen des Verriegelungselements mitbewegte Bauteil mit dem daran angeordneten Magnetelement relativ zu dem anderen Verschlussteil bewegt, so dass die zwischen den Verschlussteilen wirkende magnetische Anziehungskraft reduziert wird und damit die Verschlussteile nach Öffnen des Verriegelungselements in einfacher Weise voneinander entnommen werden können.

Zum Rückstellen des Verriegelungselements ist vorzugsweise eine Rückstelleinrichtung vorgesehen, die zwischen dem Gehäuse und dem Verriegelungselement wirkt und zum Bereitstellen einer Rückstellkraft dient. Die Rückstelleinrichtung kann beispielsweise federmechanisch, beispielsweise als federmechanisches Federelement in Form einer Druckfeder, ausgebildet sein. Die Rückstelleinrichtung kann beispielsweise aber auch magnetisch ausgebildet sein und Magnetelemente aufweisen, die eine magnetische Rückstellkraft auf das Verriegelungselement in Richtung der ersten Stellung ausüben.

Grundsätzlich ist auch denkbar und möglich, dass die Rückstellkraft durch Magnetelemente bereitgestellt ist, die an der Verschlussvorrichtung zum Unterstützen des Schließens der Verschlussteile vorgesehen sind. Ist ein das Schließen unterstützendes Magnetelement an dem Verriegelungselement vorgesehen und ist das Verriegelungselement zum Öffnen der Verschlussvorrichtung aus seiner ersten Stellung herausbewegt worden, so wirkt bei Ansetzen der Verschlussteile aneinander zum Schließen der Verschlussvorrichtung zwischen dem Magnetelement des Verriegelungselements und dem Magnetelement des anderen Verschlussteils durch magnetische Anziehung eine Kraft auf das Verriegelungselement, die mit einer Vektorkomponente (auch) in Richtung der ersten Stellung gerichtet ist und somit ein Rückstellen des Verriegelungselements bewirken kann.

In einer weiteren Ausgestaltung weist das Gehäuse eine Eingriffsöffnung auf, in die das andere der Verschlussteile mit einem Rastabschnitt eingesetzt werden kann. Das Gehäuse weist einen entlang der Schließrichtung erstreckten, in Schließrichtung an die Eingriffsöffnung anschließenden Führungsabschnitt auf, der dazu ausgebildet ist, das andere der Verschlussteile bei Ansetzen an das Gehäuse in die Schließstellung zu führen. Insbesondere kann ein Rastabschnitt des anderen Verschlussteils entlang des Führungsabschnitts gleiten, so dass der erste Abschnitt in zuverlässiger Weise in Eingriff mit dem Verriegelungselement des Verschlussteils geführt wird.

Das Verriegelungselement umfasst vorzugsweise einen Rastabschnitt zum rastenden Verriegeln mit dem anderen Verschlussteil. In einer Ausgestaltung ist hierbei denkbar und möglich, dass der Rastabschnitt elastisch federnd zu einem Gehäuseabschnitt des Verriegelungselements angeordnet ist. Aufgrund der elastisch federnden Ausgestaltung des Rastabschnitts muss das Verriegelungselement bei Ansetzen der Verschlussteile aneinander nicht aus seiner ersten Stellung ausgelenkt werden, sondern verbleibt in der ersten Stellung. Lediglich der elastisch federnd mit dem Gehäuseabschnitt des Verriegelungselements verbundene Rastabschnitt weicht aus und gelangt formschlüssig in Eingriff mit dem zugeordneten Rastabschnitt des anderen Verschlussteils.

Ist der Rastabschnitt nicht elastisch federnd ausgebildet, sondern starr an dem Verriegelungselement angeordnet, so weicht das Verriegelungselement bei Ansetzen der Verschlussteile aneinander (geringfügig) aus, bis der Rastabschnitt des Verriegelungselements in Eingriff mit dem Rastabschnitt des anderen Verschlussteils gelangt ist.

Das Verriegelungselement kann in einer konkreten Ausgestaltung beispielsweise verschwenkbar an dem Gehäuse gelagert sein. Eine Schwenkachse, um die das Verriegelungselement schwenkbar ist, kann hierbei beispielsweise quer oder parallel zur Schließrichtung erstreckt sein. Alternativ ist auch denkbar und möglich, das Verriegelungselement verschiebbar an dem Gehäuse zu lagern. Zum Öffnen der Verschlussvorrichtung kann das Verriegelungselement somit relativ zu dem Gehäuse verschwenkt oder verschoben werden, um auf diese Weise den Rastabschnitt des Verriegelungselements außer Eingriff mit dem Rastabschnitt des anderen Verschlussteils zu bringen.

Durch Verschwenken oder Verschieben wird das Verriegelungselement somit zum Öffnen der Verschlussvorrichtung bewegt. Das Bewegen des Verriegelungselements aus der ersten Stellung in die zweite Stellung erfolgt entlang einer (geradlinig oder gekrümmt verlaufenden) Öffnungsrichtung, die sich vorzugsweise von der Schließrichtung unterscheidet und insbesondere auch nicht entgegengesetzt zur Schließrichtung gerichtet ist. Die Öffnungsrichtung kann beispielsweise zumindest näherungsweise quer zur Schließrichtung oder unter einem schrägen Winkel zur Schließrichtung gerichtet sein.

Das Verriegelungselement kann durch einen Nutzer manuell betätigt werden, beispielsweise indem ein Nutzer an einem mit dem Verriegelungselement verbundenen Griff oder dergleichen angreift und darüber das Verriegelungselement zum Entriegeln der Verschlussvorrichtung aus der ersten Stellung in Richtung der zweiten Stellung bewegt. Ein solcher Griff kann starr mit dem Verriegelungselement ausgebildet sein. Alternativ ist jedoch auch denkbar und möglich, ein entlang einer Betätigungsrichtung verstellbar an dem Gehäuse angeordnetes Betätigungselement vorzusehen, dass bei Betätigung zum Bewegen des Verriegelungselements aus der ersten Stellung heraus auf das Verriegelungselement einwirkt. Das Betätigungselement kann beispielsweise gradlinig verschiebbar an dem Gehäuse geführt sein und z.B. als Druckknopf ausgebildet sein, der zum Betätigen des Verriegelungselements in das Gehäuse hineingedrückt werden kann.

Das Betätigungselement wirkt mit dem Verriegelungselement zusammen, um das Verriegelungselement zum Öffnen der Verschlussvorrichtung aus der ersten Stellung in Richtung der zweiten Stellung zu verstellen. Hierzu kann das Betätigungselement beispielsweise eine schräg zur Betätigungsrichtung gerichtete Schrägfläche aufweisen, die ausgebildet ist, bei Betätigung des Betätigungselements auf eine zugeordnete Schrägfläche des Verriegelungselements aufzulaufen und dadurch das Verriegelungselement aus der ersten Stellung zu verstellen. Die Schrägfläche des Betätigungselements einerseits und die Schrägfläche des Verriegelungselements andererseits sind so geformt und gerichtet, dass bei Bewegen des Betätigungselements in die Betätigungsrichtung die Schrägflächen aneinander gleiten und eine Verstellkraft auf das Verriegelungselement in Öffnungsrichtung bewirken. Die entlang der Betätigungsrichtung gerichtete Betätigungskraft wird somit in eine Verstellkraft entlang der Öffnungsrichtung zum Verstellen des Verriegelungselements aus der ersten Stellung in Richtung der zweiten Stellung umgelenkt.

Die Betätigungsrichtung kann beispielsweise senkrecht zur Öffnungsrichtung gerichtet sein. Die Schrägflächen können beispielsweise unter einem Winkel von näherungsweise 45° sowohl zur Betätigungsrichtung als auch zur Öffnungsrichtung erstreckt sein.

In einer Weiterbildung kann zusätzlich ein Vorspannelement vorgesehen sein, das entlang der Betätigungsrichtung verstellbar an dem Betätigungselement geführt und gegenüber dem Betätigungselement elastisch beispielsweise über ein federmechanisches Federelement oder auch über geeignete magnetische Mittel vorgespannt ist. Das Vorspannelement dient zum Zurückstellen des Betätigungselements entgegen der Betätigungsrichtung nach einer Betätigung. Ist das Betätigungselement, beispielsweise ein Betätigungsknopf, in die Betätigungsrichtung verstellt worden, so wird durch die vorspannende Wirkung des Vorspannelements das Betätigungselement nach Betätigung entgegen der Betätigungsrichtung wiederum in seine Ausgangslage zurückgestellt.

Das Vorspannelement kann zudem ein Magnetelement aufweisen, das in der ersten Stellung des Verriegelungselements einem zweiten Magnetelement des Verriegelungselements magnetisch anziehend und in der zweiten Stellung des Verriegelungselements einem dritten Magnetelement des Verriegelungselements magnetisch abstoßend gegenübersteht. Hierdurch kann bewirkt werden, dass sich die Stellung des Vorspannelements abhängig von der Stellung des Verriegelungselements entlang der Betätigungsrichtung relativ zum Verriegelungselement ändert, was dazu verwendet werden kann, anzuzeigen, ob die Verschlussvorrichtung nach dem Öffnen und nach erneutem Schließen in korrekter Weise ihre Schließstellung erreicht hat und somit wiederum verriegelt worden ist.

So kann das Betätigungselement zunächst zum Öffnen der Verschlussvorrichtung aus einer Ausgangslage in die Betätigungsrichtung zum Verstellen des Verriegelungselements aus der ersten Stellung in die zweite Stellung zu verstellen sein. Aufgrund der magnetisch abstoßenden Wechselwirkung des ersten Magnetelements des Vorspannelements mit dem dritten Magnetelement des Verriegelungselements wird nach Beendigung der Betätigung des Betätigungselements das Vorspannelement entgegen der Betätigungsrichtung von dem Verriegelungselement abgestoßen und dadurch das Betätigungselement entgegen der Betätigungsrichtung über die Ausgangslage hinaus verstellt, so dass das Betätigungselement über die Ausgangslage hinaus beispielsweise aus dem Gehäuse vorsteht. Erst nach dem zeitverzögerten Rückstellen des Verriegelungselements in die erste Stellung steht das Vorspannelement mit seinem daran angeordneten ersten Magneten wiederum magnetisch anziehend dem zweiten Magneten des Verriegelungselements gegenüber, so dass das Vorspannelement hin zum Verriegelungselement gezogen und dadurch das Betätigungselement in die Betätigungsrichtung zurück in seine Ausgangslage gebracht wird. Gelangt das Verriegelungselement nicht zurück in seine erste Stellung, so wird auch das Betätigungselement nicht aus seiner herausgestellten Stellung zurück in die Ausgangslage verstellt, was von außen deutlich sichtbar ist und somit ein nichtvollständiges Verriegeln der Verschlussvorrichtung anzeigt.

Denkbar und möglich ist auch, dass das Betätigungselement über eine Feder in Richtung der herausgestellten Stellung gegenüber dem Gehäuse vorgespannt ist. In diesem Fall kann auf das dritte Magnetelement an dem Verriegelungselement verzichtet werden. In der ersten Stellung steht das erste Magnetelement des Vorspannelements magnetisch anziehend dem zweiten Magnetelement des Verriegelungselements gegenüber und wird dadurch in seiner Ausgangslage gehalten (die magnetisch anziehende Wirkung ist hierfür stärker zu dimensionieren als die Vorspannkraft zwischen dem Betätigungselement und dem Gehäuse). Wird das Verriegelungselement in die zweite Stellung befördert, schwächt sich die magnetische Anziehungskraft zwischen dem ersten Magnetelement des Vorspannelements und dem zweiten Magnetelement des Verriegelungselements ab, so dass das Betätigungselement entgegen der Betätigungsrichtung aufgrund der Vorspannkraft zwischen dem Betätigungselement und dem Gehäuse über die Ausgangslage hinaus in die herausgestellte Stellung bewegt wird.

Das zweite Magnetelement des Verriegelungselements kann auch zum Unterstützen des Schließens dienen.

Eine Zustandsanzeige kann auch unter Verwendung eines Sensors bereitgestellt werden, die ein nichtvollständiges Verriegeln der Verschlussvorrichtung detektiert und entsprechend anzeigt, beispielsweise über ein optisches oder akustisches Signal.

Eine Verschlussvorrichtung der hier beschriebenen Art kann in vielfältiger Weise eingesetzt werden.

Beispielsweise kann eine Verschlussvorrichtung der hier beschriebenen Art, ggf. in Kombination mit anderen Verschlussvorrichtungen, bei einem Kinderwagen beispielsweise zur Kopplung eines Aufsatzes mit einem Untergestell oder bei einem Kindersitz für ein Fahrzeug zur Kopplung eines Sitzteils mit einem Untergestell Verwendung finden.

Eine Verschlussvorrichtung der hier beschriebenen Art kann aber auch an Behältern, Taschen, Kisten oder sonstigen Containern Verwendung finden. Oder Schließvorrichtungen, beispielsweise Gebäude- oder Möbeltüren, können unter Verwendung einer oder mehrerer Verschlussvorrichtungen der hier beschriebenen Art verriegelt werden.

Grundsätzlich kann eine Verschlussvorrichtung der hier beschriebenen Art aber auch zum Verschließen und Verriegeln gänzlich anders gearteter Gegenstände Verwendung finden.

Eine Verzögerungseinrichtung der hier beschriebenen Art kann grundsätzlich bei ganz unterschiedlichen mechanischen oder magnetisch-mechanischen Verschlussvorrichtung zum Einsatz kommen. Beispielsweise kann die Verschlussvorrichtung so ausgestaltet sein wie in der WO 2008/006357 A2, der WO 2008/006354 A2, der WO 2009/092368 A2, der WO 2010/006594 A2, der WO 2008/006356 A2, der WO 2009/010049 A2, der WO 2009/12796 A2, der WO 2014/090926 A1 und der internationalen Anmeldung PCT/EP 2013/060762 beschrieben.

Der der Erfindung zugrunde liegende Gedanke soll nachfolgend anhand der in den Figuren dargestellten Ausführungsbeispiele näher erläutert werden. Es zeigen:
- Fig. 1A, 1B: perspektivische Explosionsansichten eines ersten nicht erfindungsgemäßen Ausführungsbeispiels einer Verschlussvorrichtung;
- Fig. 2A, 2B: Ansichten der Verschlussvorrichtung vor dem Schließen;
- Fig. 3A, 3B: Ansichten der Verschlussvorrichtung beim Schließen;
- Fig. 4A, 4B: Ansichten der Verschlussvorrichtung beim Schließen;
- Fig. 4C: eine Teilschnittansicht der Verschlussvorrichtung im Ausschnitt A gemäß Fig. 4A;
- Fig. 5A, 5B: Ansichten der Verschlussvorrichtung in einer Schließstellung bei miteinander verriegelten Verschlussteilen;
- Fig. 6A, 6B: Ansichten der Verschlussvorrichtung beim Öffnen;
- Fig. 6C: eine Teilschnittansicht der Verschlussvorrichtung im Ausschnitt A gemäß Fig. 6A;
- Fig. 7A, 7B: Ansichten der Verschlussvorrichtung in einer geöffneten Stellung;
- Fig. 7C: eine Teilschnittansicht der Verschlussvorrichtung im Ausschnitt A gemäß Fig. 7A;
- Fig. 8A, 8B: perspektivische Explosionsansichten eines erfindungsgemäßen Ausführungsbeispiels einer Verschlussvorrichtung;
- Fig. 9A, 9B: Ansichten der Verschlussvorrichtung vor dem Schließen;
- Fig. 10A, 10B: Ansichten der Verschlussvorrichtung beim Schließen;
- Fig. 11A, 11B: Ansichten der Verschlussvorrichtung beim Schließen;
- Fig. 11C: eine Teilschnittansicht der Verschlussvorrichtung im Ausschnitt A gemäß Fig. 11A;
- Fig. 12A, 12B: Ansichten der Verschlussvorrichtung in einer Schließstellung bei miteinander verriegelten Verschlussteilen;
- Fig. 13A, 13B: Ansichten der Verschlussvorrichtung beim Öffnen;
- Fig. 13C: eine Teilschnittansicht der Verschlussvorrichtung im Ausschnitt A gemäß Fig. 13A;
- Fig. 14A, 14B: Ansichten der Verschlussvorrichtung in einer geöffneten Stellung;
- Fig. 14C: eine Teilschnittansicht der Verschlussvorrichtung im Ausschnitt A gemäß Fig. 14A;
- Fig. 15A, 15B: Explosionsansichten eines zweiten erfindungsgemäßen Ausführungsbeispiels einer Verschlussvorrichtung;
- Fig. 16A: eine Draufsicht auf die Verschlussvorrichtung in einer Schließstellung;
- Fig. 16B: eine Schnittansicht entlang der Linie A - A gemäß Fig. 16A;
- Fig. 16C: eine Schnittansicht entlang der Linie B - B gemäß Fig. 16A;
- Fig.17A: eine Draufsicht auf die Verschlussvorrichtung beim Öffnen;
- Fig. 17B: eine Schnittansicht entlang der Linie A - A gemäß Fig. 17A;
- Fig. 17C: eine Schnittansicht entlang der Linie B - B gemäß Fig. 17A;
- Fig. 17D: eine Schnittansicht entlang der Linie C - C gemäß Fig. 17A;
- Fig. 18A: eine Draufsicht auf die Verschlussvorrichtung bei Rückstellen eines Verriegelungselements nach dem Öffnen der Verschlussvorrichtung;
- Fig. 18B: eine Schnittansicht entlang der Linie A - A gemäß Fig. 18A;
- Fig. 18C: eine Schnittansicht entlang der Linie B - B gemäß Fig. 18A;
- Fig. 19A: eine Draufsicht auf die Verschlussvorrichtung beim Rückstellen des Verriegelungselements;
- Fig. 19B: eine Schnittansicht entlang der Linie A - A gemäß Fig. 19A;
- Fig. 19C: eine Schnittansicht entlang der Linie B - B gemäß Fig. 19A;
- Fig. 19D: eine Schnittansicht entlang der Linie C - C gemäß Fig. 19B;
- Fig. 20A: eine Draufsicht auf die Verschlussvorrichtung in geöffneter Stellung;
- Fig. 20B: eine Schnittansicht entlang der Linie A - A gemäß Fig. 20A; und
- Fig. 20C: eine Schnittansicht entlang der Linie B - B gemäß Fig. 20A.

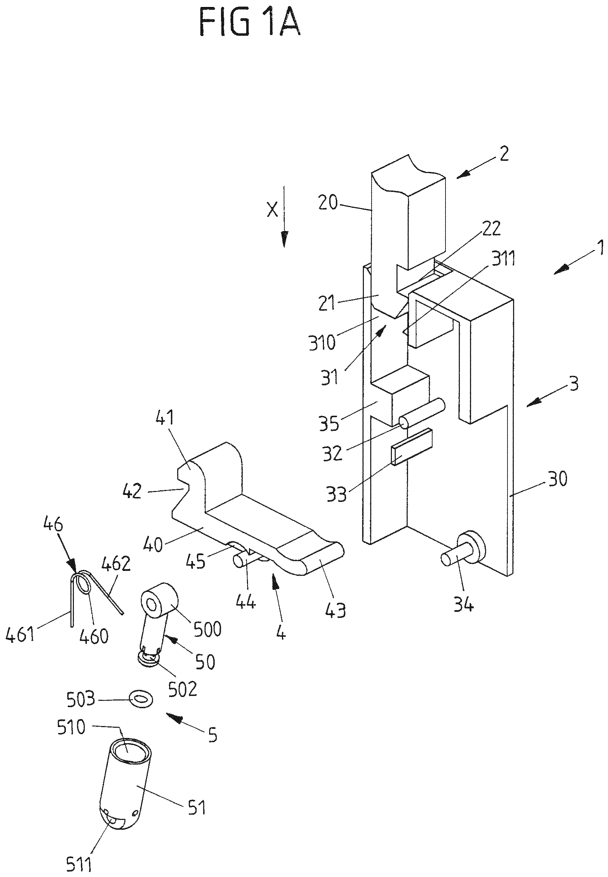

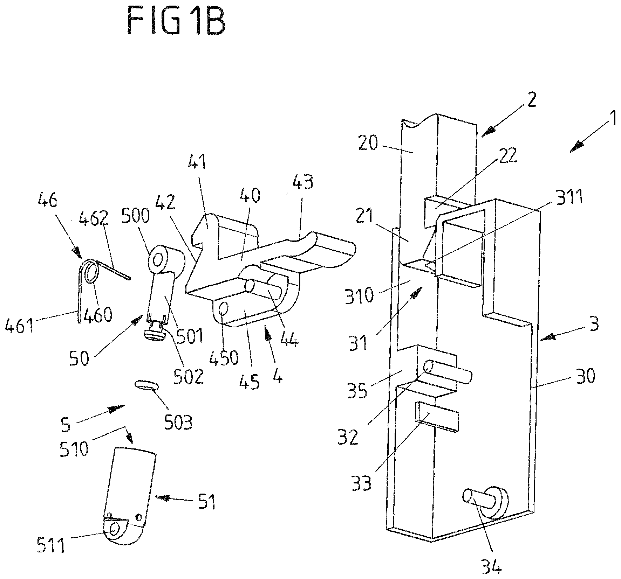

Fig. 1A, 1B bis 7A-7C zeigen in unterschiedlichen Ansichten ein nicht erfindungsgemäßes Ausführungsbeispiel einer Verschlussvorrichtung 1, die ein erstes Verschlussteil 2 (das so genannte "Male-Teil") und ein zweites Anschlussteil 3 (das so genannte "Female-Teil") aufweist. Die Verschlussteile 2, 3 liegen in einer geöffneten Stellung getrennt voneinander vor und können zum Schließen der Verschlussvorrichtung 1 aneinander angesetzt werden. In einer Schließstellung sind die Verschlussteile 2, 3 mechanisch miteinander verriegelt und somit aneinander gehalten.

Eine Verschlussvorrichtung 1 dieser Art kann zum lösbaren Verbinden beliebiger Teile miteinander verwendet werden.

Das erste Verschlussteil 2 ist bei dem dargestellten Ausführungsbeispiel zapfenförmig mit einem Körper 20 und einem daran angeordneten Rastabschnitt in Form einer Rastnase 21 ausgebildet. In den Körper 20 ist eine Ausnehmung 22 eingeformt, in die eine Rastnase 41 eines Verriegelungselements 4 des zweiten Verschlussteils 3 in verriegelter Stellung der Verschlussvorrichtung 1 eingreift.

Das zweite Verschlussteil 3 weist ein Gehäuse 30 auf, in das eine Eingriffsöffnung 31 eingeformt ist. Das erste Verschlussteil 2 kann in eine Schließrichtung X in die Eingriffsöffnung 31 des zweiten Verschlussteils 3 eingesetzt werden. An die Eingriffsöffnung 31 schließen entlang der Schließrichtung X erstreckte Führungsabschnitte 310, 311 an, zwischen denen das erste Verschlussteil 2 beim Schließen der Verschlussvorrichtung 1 in Richtung der Schließrichtung X geführt wird.

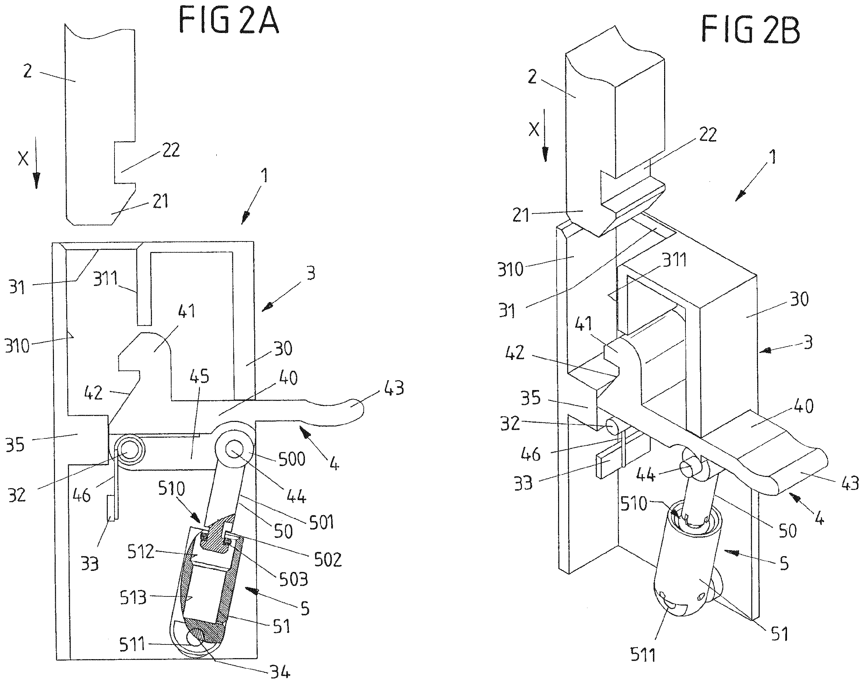

An dem Gehäuse 30 ist ein Verriegelungselement 4 um eine Gelenkachse 32 schwenkbar gelagert. Das Verriegelungselement 4 weist an einem Körper 40 einen Rastabschnitt in Form einer Rastnase 41 und eine daran anschließende Ausnehmung 42 auf und ist über ein an der Gelenkachse 32 angeordnetes Federelement 46 in Form einer Schenkelfeder in Richtung einer ersten Stellung (siehe Fig. 2A, 2B) gegenüber dem Gehäuse 30 vorgespannt. Das Federelement 46 ist hierbei mit einer Windung 460 auf die Gelenkachse 32 aufgesetzt und stützt sich über Federarme 461, 462 einerseits an einem Anschlag 33 des Gehäuse 30 und andererseits an dem Körper 40 des Verriegelungselements 4 ab.

Das Verriegelungselement 4 weist einen unterseitig des Körpers 40 erstreckten Steg 45 auf, der eine Anlenkstelle 450 umfasst, die von der Gelenkachse 32 durchgriffen wird und über die das Verriegelungselement 4 gelenkig an dem Gehäuse 30 gelagert ist.

Zwischen dem Verriegelungselement 4 und dem Gehäuse 30 wirkt eine Verzögerungseinrichtung 5, die bei dem beschriebenen Ausführungsbeispiel als pneumatische Verzögerungseinrichtung ausgestaltet ist. Die Verzögerungseinrichtung 5 ist über eine Anlenkstelle 500 an einer Gelenkachse 44, die an dem Steg 45 des Verriegelungselements 4 angeordnet ist, an dem Verriegelungselement 4 angelenkt und ist zudem über eine Anlenkstelle 511 gelenkig an einer Gelenkachse 34 des Gehäuses 30 angeordnet.

Die Verzögerungseinrichtung 5 umfasst ein erstes Bauteil in Form eines Kolbenelements 50 und ein zweites Bauteil in Form eines Gehäuseelements 51. Das Kolbenelement 50 weist einen zylindrischen Schaft 501 auf, an dem eine ringförmige Ausnehmung 502 zur Aufnahme eines Dichtungselements 503 in Form eines ringförmigen O-Rings angeformt ist. Das Gehäuseelement 51 weist demgegenüber eine Öffnung 510 auf, in die das Kolbenelement 50 mit dem Schaft 501 eintauchen kann, wie nachfolgend noch beschrieben werden soll.

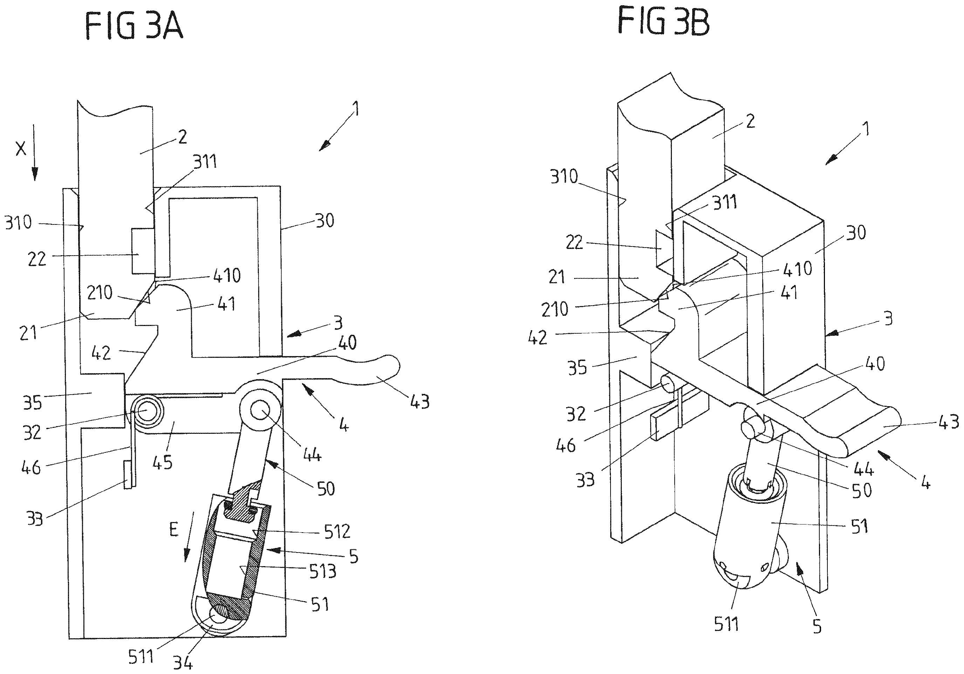

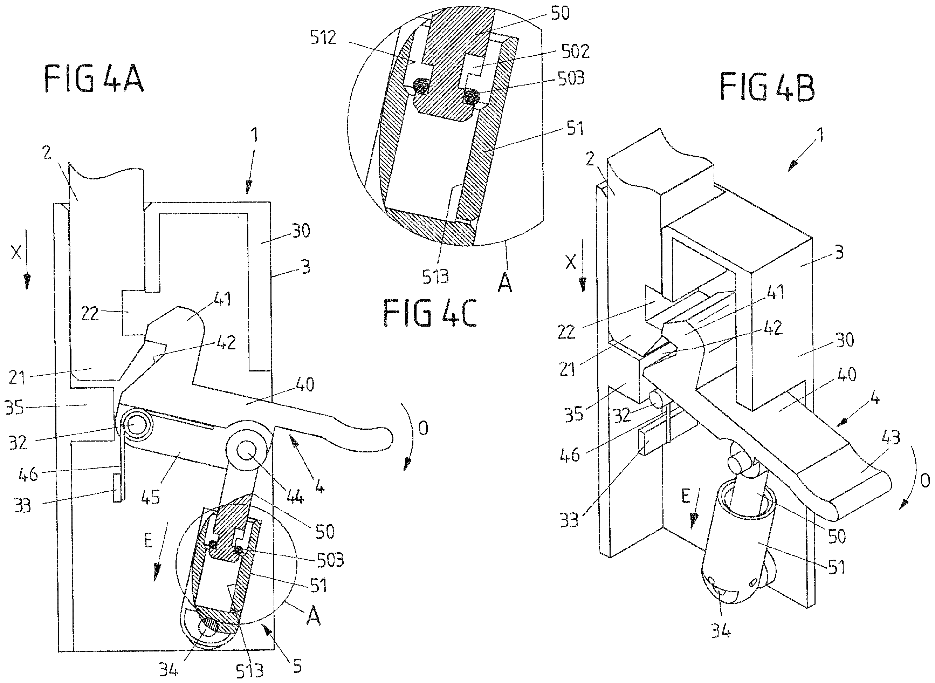

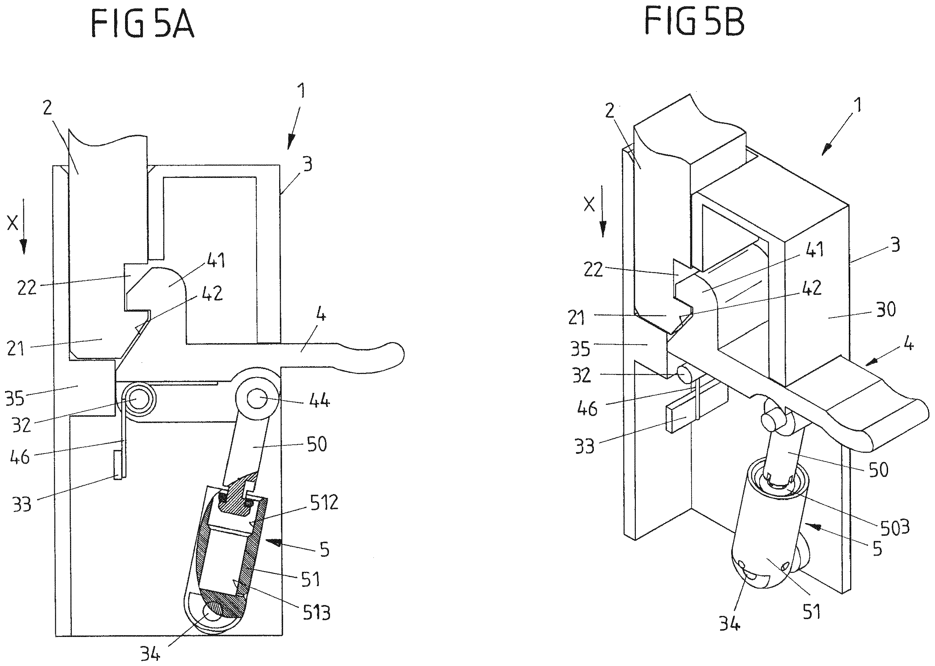

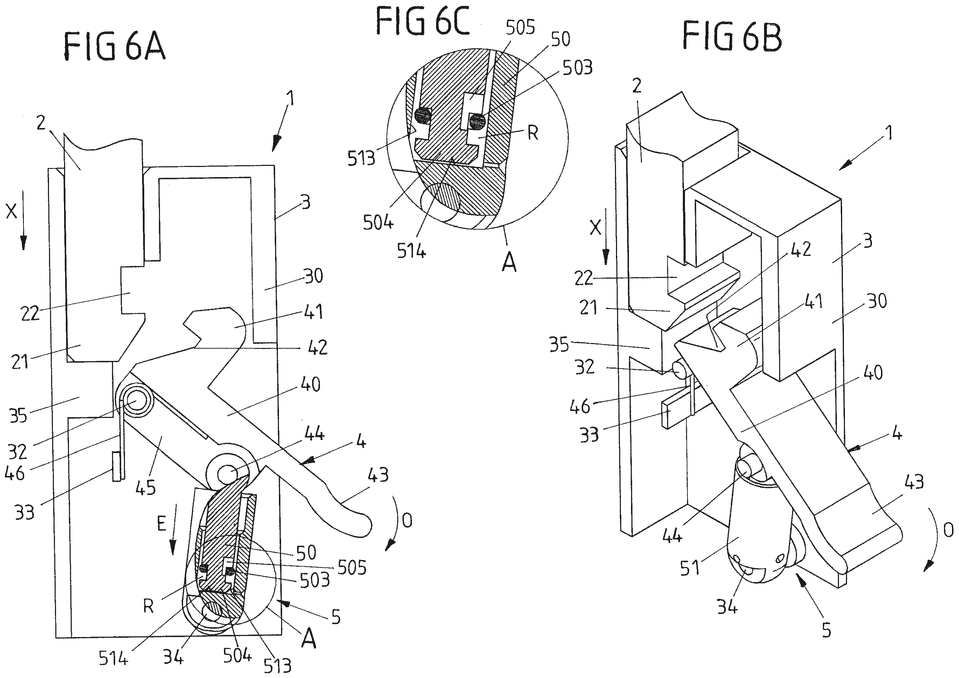

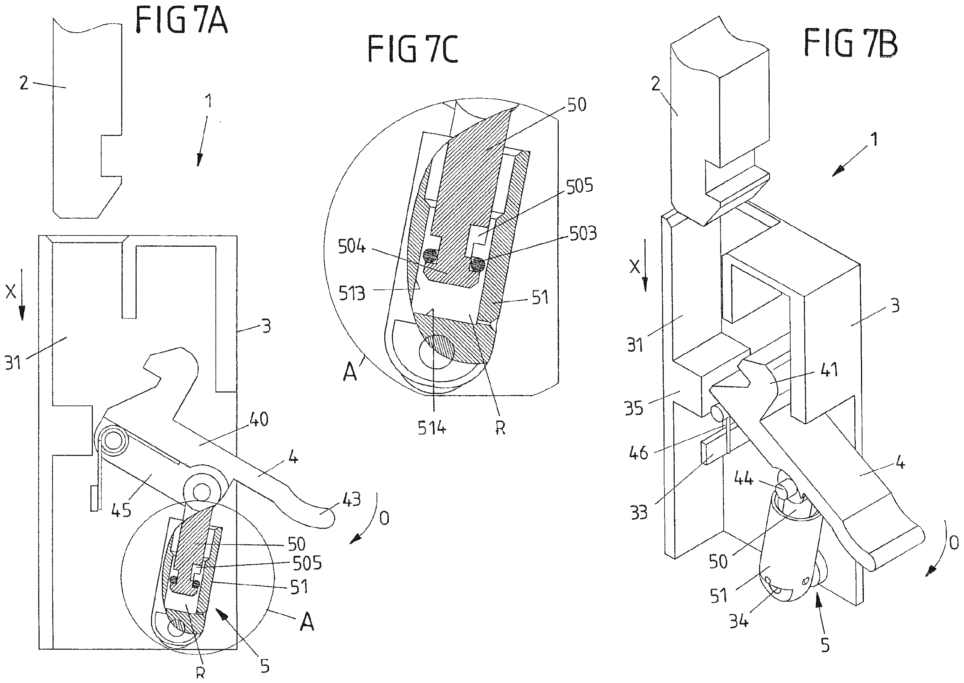

Fig. 2A, 2B bis Fig. 7A-7C zeigen die Verschlussvorrichtung 1 in unterschiedlichen Funktionszuständen vor dem Schließen (Fig. 2A, 2B), beim Schließen (Fig. 3A, 3B sowie Fig. 4A-4C), in einer Schließstellung (Fig. 5A, 5B), beim Öffnen (Fig. 6A-6C) und nach dem Öffnen beim Zurückstellen des Verriegelungselements 4 in seine Ausgangsstellung (Fig. 7A-7C).

Vor dem Schließen (Fig. 2A, 2B) liegen die Verschlussteile 2, 3 getrennt voneinander vor. Das erste Verschlussteil 2 kann in eine Schließrichtung X mit seinem Rastabschnitt 21 in die Eingriffsöffnung 31 des zweiten Verschlussteils 3 eingesetzt werden, um auf diese Weise die Verschlussvorrichtung 1 zu verschließen.

Vor dem Schließen befindet sich das Verriegelungselement 4 in einer ersten Stellung. In dieser ersten Stellung wird das Verriegelungselement 4 durch die vorspannende Federwirkung des Federelements 46 gehalten. In dieser ersten Stellung taucht der Schaft 501 des Kolbenelements 50 der Verzögerungseinrichtung 5 in eine erste Kammer 512 innerhalb des Gehäuseelements 51 ein, wobei ein Spiel zwischen dem Dichtungselement 503 an dem Schaft 501 und der Innenwandung der zylindrischen Kammer 512 besteht.

Bei Einsetzen des ersten Verschlussteils 2 in die Eingriffsöffnung 31 im Gehäuse 30 des zweiten Verschlussteils 3 läuft der Rastabschnitt 21 des ersten Verschlussteils 2 mit einer daran angeordneten, schräg zur Schließrichtung X erstreckten Auflaufschräge 210 auf eine zugeordnete Auflaufschräge 410 am Rastabschnitt 41 des Verriegelungselements 4 auf (Fig. 3A, 3B). Dies bewirkt, dass das Verriegelungselement 4 (geringfügig) um die Gelenkachse 32 in eine Öffnungsrichtung O verschwenkt wird (Fig. 4A, 4B), so dass der Rastabschnitt 21 des ersten Verschlussteils 2 an dem Rastabschnitt 41 des Verriegelungselements 4 des zweiten Verschlussteils 3 vorbei bewegt werden kann.

Bei dieser Ausweichbewegung des Verriegelungselements 4 bewegt sich das Dichtungselement 503 mit Spiel in der Kammer 512 des Gehäuseelements 41 der Verzögerungseinrichtung 5 und kann sich somit (zumindest nahezu) ungehindert in dem Gehäuseelement 51 bewegen (Fig. 4C).

In der Schließstellung (Fig. 5A, 5B) liegt der Rastabschnitt 21 an einem Anschlag 35 des Gehäuses 30 des zweiten Verschlussteils 3 an und steht zudem mit der Ausnehmung 42 des Verriegelungselements 4 in Eingriff. Zudem steht der Rastabschnitt 41 des Verriegelungselements 4 mit der Ausnehmung 22 des ersten Verschlussteils 2 in Eingriff. Das erste Verschlussteil 2 ist somit über das Verriegelungselement 4 formschlüssig mit dem zweiten Verschlussteil 3 verriegelt und ist insbesondere entgegen der Schließrichtung X an dem zweiten Verschlussteil 3 gehalten. In dieser Schließstellung befindet sich das Verriegelungselement 4 wiederum in seiner der Ausgangslage entsprechenden ersten Stellung, in die es aufgrund der vorspannenden Federwirkung des Federelements 46 zurück geschnappt ist.

Zum Öffnen der Verschlussvorrichtung 1 kann das Verriegelungselement 4 in die Öffnungsrichtung O um die Gelenkachse 32 verschwenkt werden, um auf diese Weise den Rastabschnitt 41 des Verriegelungselements 4 und den Rastabschnitt 21 des ersten Verschlussteils 2 außer Eingriff voneinander zu bringen (Fig. 6A, 6B). Das Verriegelungselement 4 weist einen aus dem Gehäuse 30 herausstehenden Griff 43 auf, der von einem Nutzer gegriffen werden kann, um auf diese Weise das Verriegelungselement 4 zu betätigen. Ist die Verriegelung zwischen dem Verriegelungselement 4 und dem ersten Verschlussteil 2 gelöst, so kann das erste Verschlussteil 2 entgegen der Schließrichtung X aus der Eingriffsöffnung 31 des Gehäuses 30 des zweiten Verschlussteils 3 entnommen werden (siehe Fig. 7A, 7B).

Bei Betätigung des Verriegelungselements 4 zum Öffnen der Verschlussvorrichtung 1 wird das Kolbenelement 50 der Verzögerungseinrichtung 5 mit seinem Schaft 501 derart in das Gehäuseelement 51 eingeführt, dass ein Kopf 504 des Schafts 501 einem Boden 514 einer axial an die erste Kammer 512 anschließenden, zweiten Kammer 513 des Gehäuseelements 51 angenähert ist. Das Dichtungselement 503 an dem Schaft 501 gelangt hierbei in Anlage mit der Innenwandung der zylindrischen zweiten Kammer 513 und stellt einen dichtenden Übergang zwischen dem Schaft 501 und der Innenwandung der Kammer 513 her.

Wie sich aus Fig. 6A und 6C ergibt, befindet sich das Dichtungselement 503 beim Einführen des Schafts 501 in das Gehäuseelement 51 in einer ersten, oberen Stellung an der Ausnehmung 502. In diese erste Stellung wird das Dichtungselement 503 bei Einführen des Schafts 501 in eine Einführrichtung E in das Gehäuseelement 51 aufgrund der reibenden Wechselwirkung mit der Innenwandung der Kammer 513 gedrückt. In dieser ersten Stellung gibt das Dichtungselement 503 eine Durchflussöffnung 505 frei, so dass ein Fluid, in diesem Fall Luft, aus einem zwischen dem Schaft 501 und der zweiten Kammer 513 des Gehäuseelements 51 gebildeten Raum R ausströmen kann und somit der Schaft 501 ohne großen Widerstand in die Einführrichtung E in die Kammer 513 eingeführt werden kann.

In der der entriegelten Stellung entsprechenden zweiten Stellung des Verriegelungselements 4 gemäß Fig. 6A, 6B ist der Kopf 504 des Schafts 501 dem Boden 514 der Kammer 513 angenähert und der durch den Schaft 501 und die Innenwandung der Kammer 513 eingeschlossene Raum R somit klein.

Wird nach Entnehmen des ersten Verschlussteils 2 und nach Beendigung der Betätigung des Verriegelungselements 4 das Verriegelungselement 4 aufgrund der vorspannenden Federwirkung des Federelements 46 entgegen der Öffnungsrichtung O in seine der Ausgangslage entsprechende erste Stellung zurückgestellt, so muss dies entgegen der bremsenden, verzögernden Wirkung der Verzögerungseinrichtung 5 erfolgen. Bei Rückstellung des Verriegelungselements 4 wird der Schaft 501 des Kolbenelements 50 aus dem Gehäuseelement 51 herausgezogen, wobei zunächst, wie aus Fig. 7A und 7C ersichtlich, das Dichtungselement 503 in eine zweite, untere Stellung in der Ausnehmung 502 verschoben wird. Dadurch wird die Durchflussöffnung 505 unwirksam gemacht. Denn sie stellt keinen Durchfluss zwischen dem Raum R und der Umgebung mehr her. Das (weitere) Herausbewegen des Schafts 501 aus der Kammer 513 erfolgt somit entgegen einer in dem Raum R aufgrund der Vergrößerung des Raums R erzeugten Unterdruckkraft, die sich nur langsam durch an dem Dichtungselement 503 vorbei oder durch eine (kleine) Öffnung in der Gehäusewandung in den Raum R einströmende Luft abbauen kann, so dass die durch das Federelement 46 bewirkte Rückstellung des Verriegelungselements 4 insgesamt gebremst wird.

Die Rückstellung des Verriegelungselements 4 aus der zweiten Stellung (Fig. 6A) in die der Ausgangslage entsprechende erste Stellung (Fig. 2A) wird somit verzögert. Die erste Stellung wird erst nach Ablauf einer vorbestimmten, durch die Verzögerungseinrichtung 5 vorgegebenen Verzögerungszeit erreicht. Erst nach Ablauf dieser Verzögerungszeit kann die Verschlussvorrichtung 1 wieder verriegeln.

Dies hat insbesondere zur Folge, dass nach Entriegeln der Verschlussvorrichtung 1 das erste Verschlussteil 2 zunächst im zweiten Verschlussteil 3 verbleiben kann, ohne dass die Verriegelung unmittelbar wiederhergestellt wird. Dies ermöglicht, bei Verwendung mehrerer solcher Verschlussvorrichtungen 1 die Verschlussvorrichtungen 1 nacheinander zu entriegeln, ohne dass die einzelnen Verschlussvorrichtungen 1 manuell in ihrer entriegelten Stellung gehalten werden müssen.

Die Verschlussvorrichtung 1 gemäß dem nicht erfindungsgemäßen Ausführungsbeispiel gemäß Fig. 1A, 1B bis 7A-7C ist als mechanische Verschlussvorrichtung ausgebildet, bei der das Ansetzen des ersten Verschlussteils 2 an das zweite Verschlussteil 3 manuell zu erfolgen hat und das erste Verschlussteil 2 insbesondere manuell in Eingriff mit dem Verriegelungselement 4 des zweiten Verschlussteils 3 zu drücken ist.

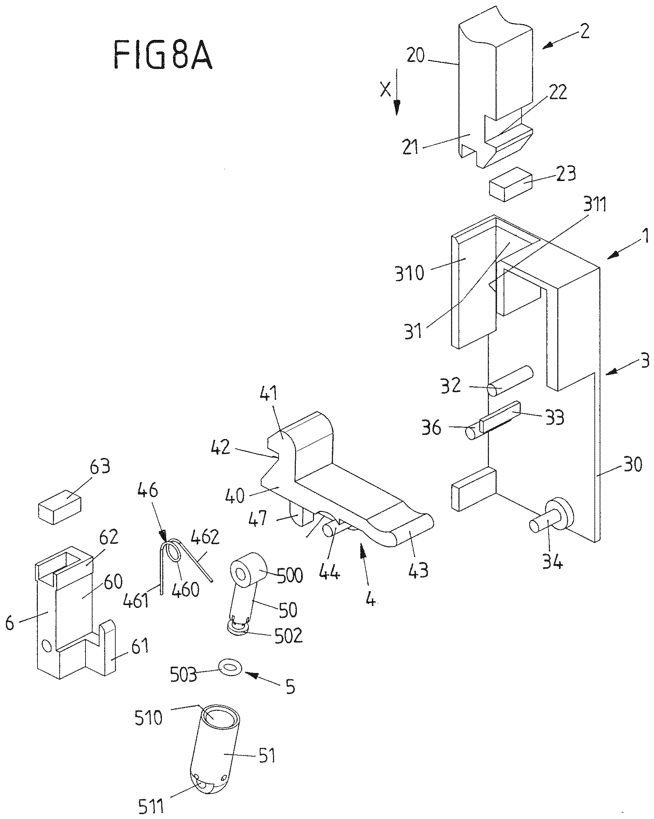

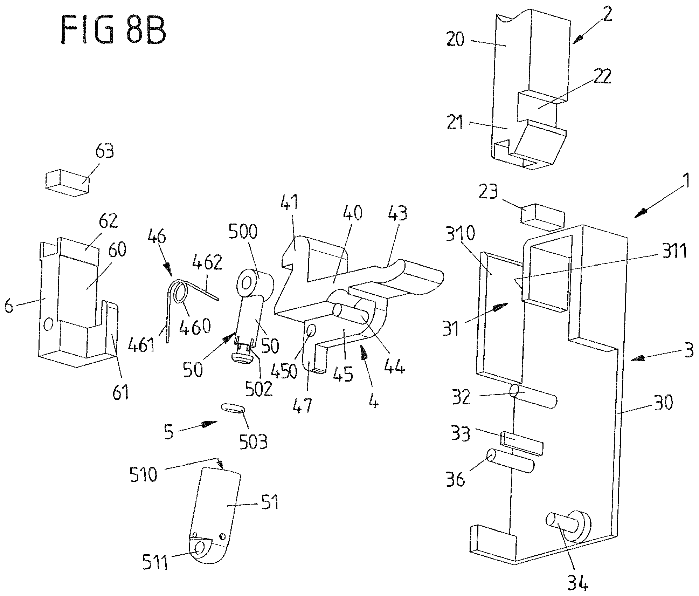

Bei einem in Fig. 8A, 8B bis 14A-14C dargestellten, erfindungsgemäßen Ausführungsbeispiel wird demgegenüber durch Verwendung magnetischer Elemente 23, 63 einerseits an dem ersten Verschlussteil 2 und andererseits an dem zweiten Verschlussteil 3 das Ansetzen des ersten Verschlussteils 2 an das zweite Verschlussteil 3 in die Schließrichtung X magnetisch unterstützt, so dass bei Ansetzen des ersten Verschlussteils 2 an die Eingriffsöffnung 31 des Gehäuses 30 des zweiten Verschlussteils 3 das Herstellen der mechanischen Verrastung in magnetisch unterstützter Weise weitgehend selbsttätig erfolgen kann.

Hierzu ist an dem Rastabschnitt 21 des ersten Verschlussteils 2 ein Magnetelement 23 angeordnet. An dem Gehäuse 30 des zweiten Verschlussteils 3 ist demgegenüber - anstelle des Anschlags 35 - eine Magnethalteeinrichtung 6 um eine Gelenkachse 36 gelenkig angeordnet, die an einem Kopf 62 ein Magnetelement 63 trägt.

Die Magnetelemente 23, 63 können beispielsweise als Permanentmagnete oder einerseits als Permanentmagnet und andererseits als magnetischer Anker in Form eines Bauelementes aus einem ferromagnetischen Material hergestellt sein.

Sind die Magnetelemente 23, 63 als Permanentmagnete ausgestaltet, so weisen sie bei Ansetzen des ersten Verschlussteils 2 an das zweite Verschlussteil 3 mit ungleichnamigen Polen aufeinander zu, so dass eine magnetische Anziehungskraft zwischen den Magnetelementen 23, 63 bewirkt wird.

Die Magnethalteeinrichtung 6 ist über einen Körper 60 und über die Gelenkachse 36 gelenkig an dem Gehäuse 30 des zweiten Verschlussteils 3 angelenkt. Von dem Körper 60 steht in Richtung des Verriegelungselements 4 ein Haken 61 vor, der mit einem von dem Steg 45 des Verriegelungselements 4 vorstehenden Haken 47 des Verriegelungselements 4 wechselwirkt.

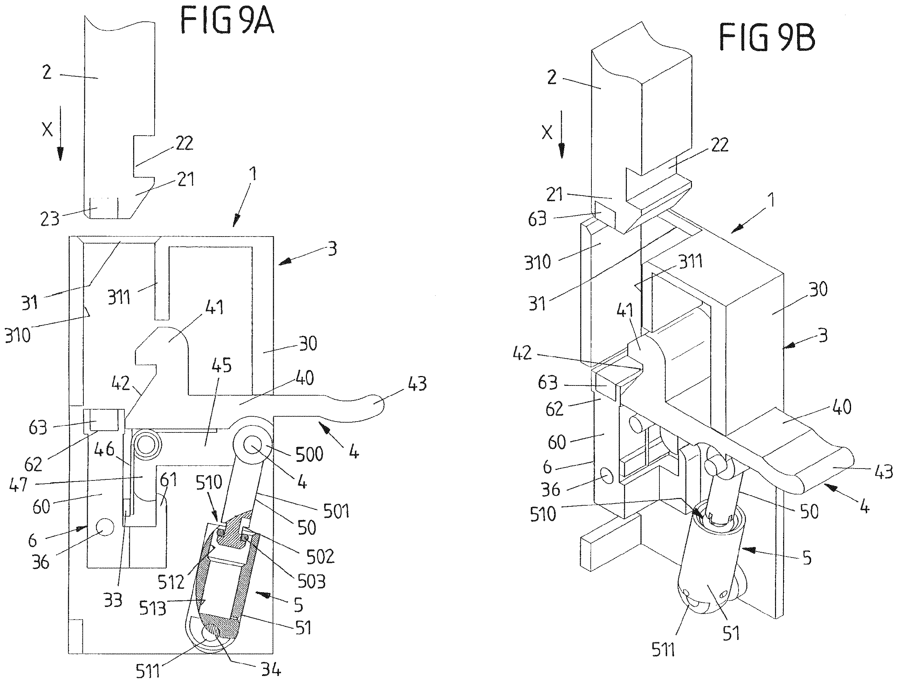

Vor dem Schließen der Verschlussvorrichtung 1 (Fig. 9A, 9B) wird die Magnethalteeinrichtung 6 durch Anlage des Hakens 61 an dem Haken 47 des Verriegelungselements 4 in einer Ruhestellung gehalten. Die Ruhestellung der Magnethalteeinrichtung 6 ist durch den Anschlag 33 definiert, an dem der Körper 60 in der Ruhestellung anliegt.

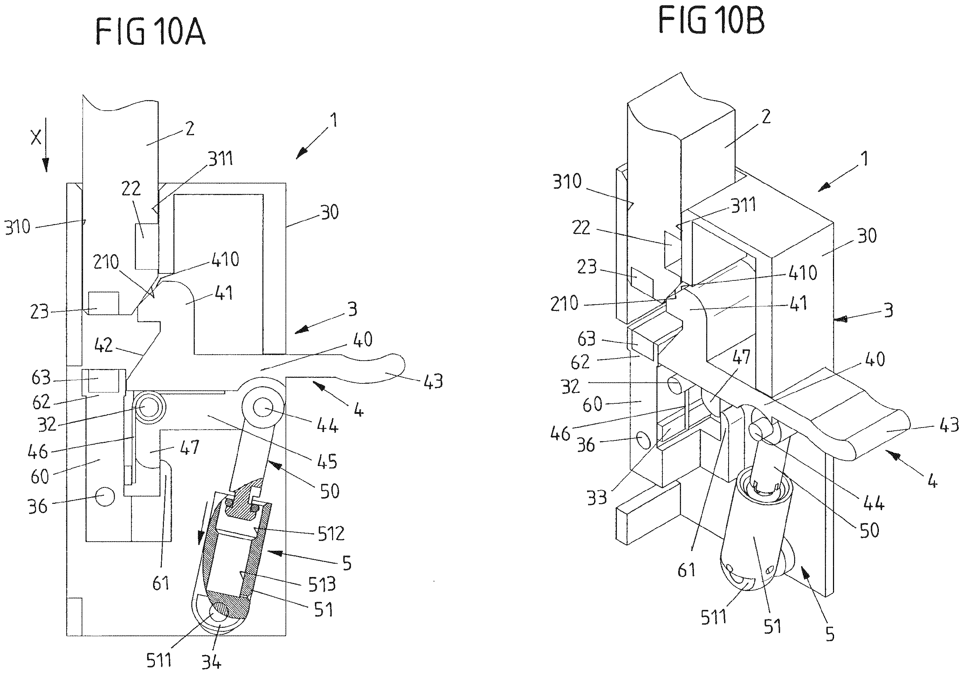

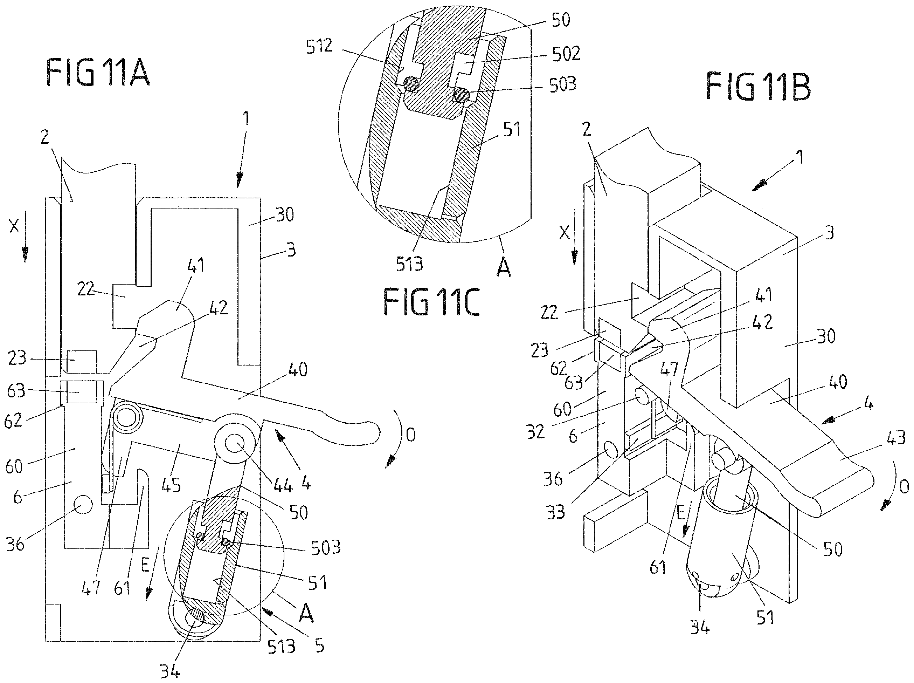

Wird das erste Verschlussteil 2 mit seinem Rastabschnitt 21 in die Eingriffsöffnung 31 eingeführt, so wird das am Rastabschnitt 21 angeordnete Magnetelement 23 dem Magnetelement 63 am Kopf 62 der Magnethalteeinrichtung 6 angenähert, wobei die magnetische Anziehungskraft zwischen den Magnetelementen 23, 63 stärker wird, je näher die Magnetelemente 23, 63 einander kommen (siehe Fig. 10, 10B und Fig. 11A-11C).

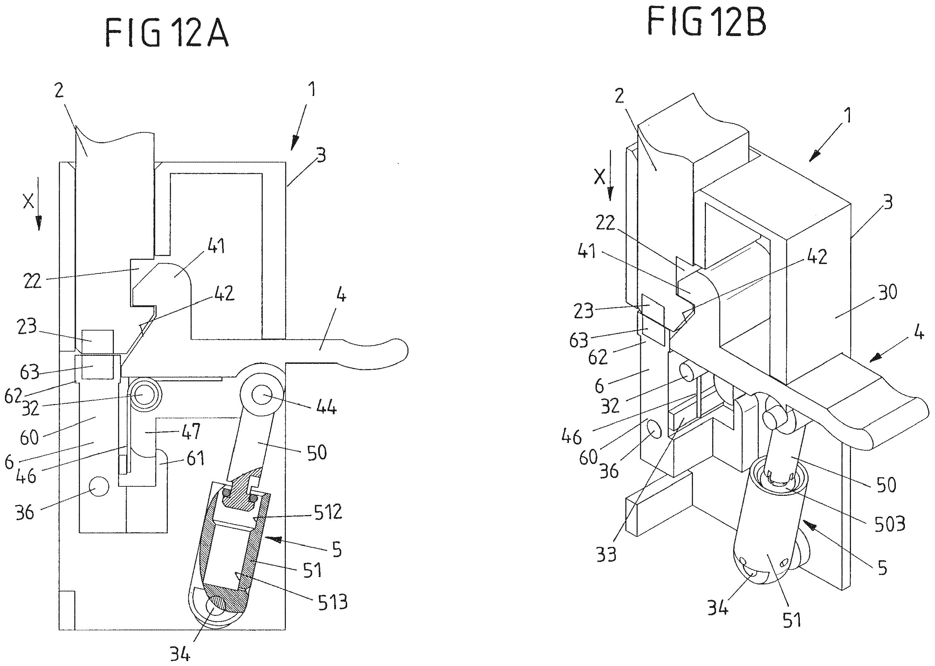

In der Schließstellung liegt der Rastabschnitt 21 an dem Kopf 62 der Magnethalteeinrichtung 6 an, die somit als Anschlag fungiert. Über das Verriegelungselement 4 ist das erste Verschlussteil 2 mit dem zweiten Verschlussteil 3 verriegelt (Fig. 12A, 12B).

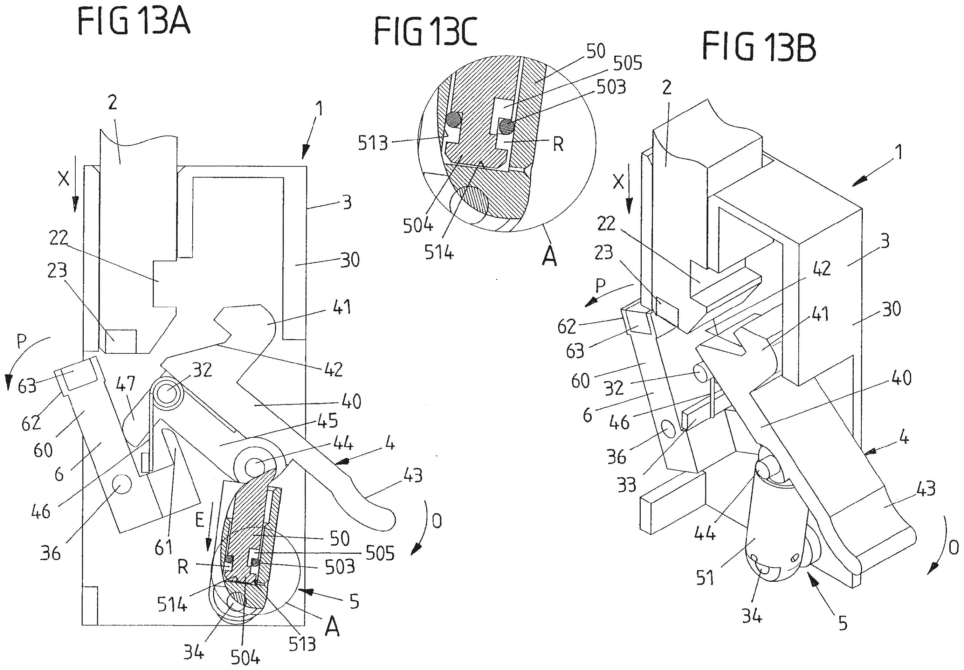

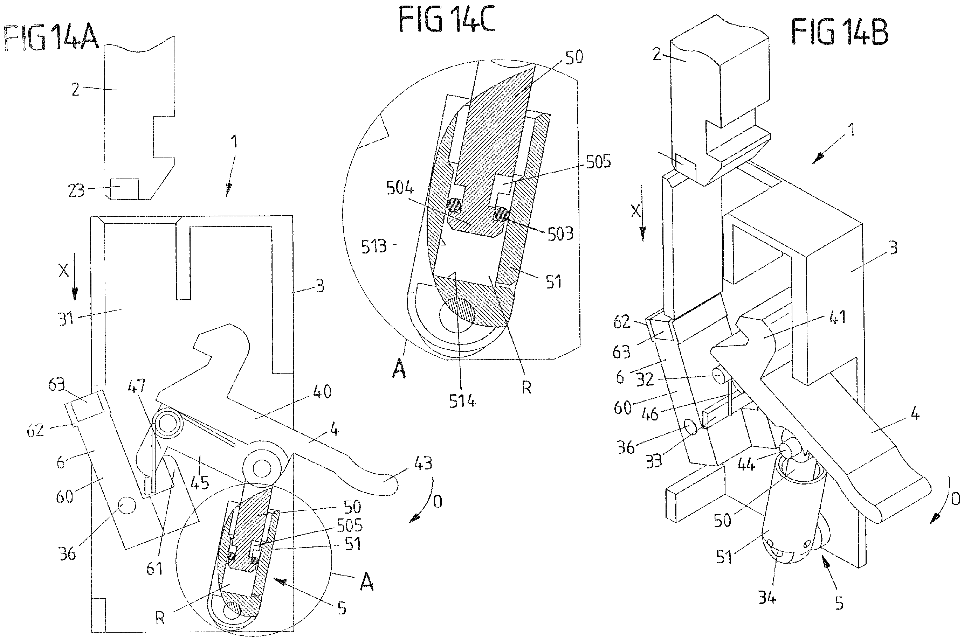

Beim Öffnen der Verschlussvorrichtung 1 durch Betätigen des Verriegelungselements 4 gelangt der Haken 47 des Verriegelungselements 4 in Anlage mit dem Körper 60 der Magnethalteeinrichtung 6 und verstellt diese somit aus ihrer Ruhestellung heraus (Fig. 13A-13C). Hierdurch wird das Magnetelement 63 am Kopf 62 der Magnethalteeinrichtung 6 tangential - quer zur Schließrichtung X - zu dem Magnetelement 23 am Rastabschnitt 21 des ersten Verschlussteils 2 bewegt, so dass die magnetische Anziehungskraft zwischen den Magnetelementen 23, 63 erheblich reduziert oder gar aufgehoben oder umgekehrt ist. Weil zudem die Verriegelung zwischen dem Verriegelungselement 4 und dem ersten Verschlussteil 2 aufgehoben ist, kann das erste Verschlussteil 2 entgegen der Schließrichtung X von dem zweiten Verschlussteil 3 entnommen werden (Fig. 14A-14C).

Bei Rückstellen des Verriegelungselements 4 in seine der Ausgangsstellung entsprechende erste Stellung (Fig. 14A-14C) wird über den Haken 47 und den Haken 61 auch die Magnethalteeinrichtung 6 wiederum zurückgeführt in ihre Ruhestellung, so dass die Magnethalteeinrichtung 6 sich in ihrer Ruhestellung befindet, wenn auch das Verriegelungselement 4 seine erste Stellung erreicht hat.

Ansonsten ist mit Blick auf die einzelnen Komponenten und die Funktionsweise - insbesondere auch mit Blick auf die Verzögerungseinrichtung 5 - das Ausführungsbeispiel gemäß Fig. 8A, 8B bis Fig. 14A-14C gleich dem nicht erfindungsgemäßen Ausführungsbeispiel gemäß Fig. 1A, 1B bis Fig. 7A-7C, so dass auf die vorangehenden Erläuterungen verwiesen werden soll.

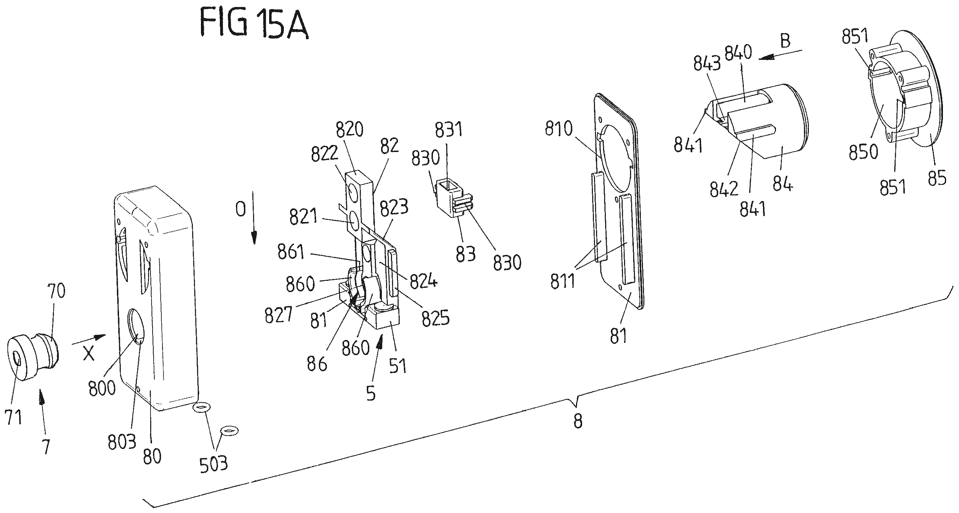

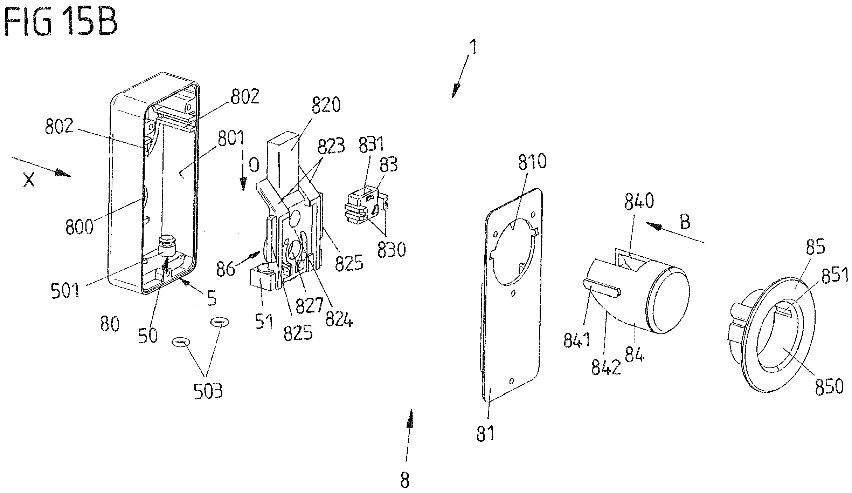

Ein anderes erfindungsgemäßes Ausführungsbeispiel einer Verschlussvorrichtung 1 zeigen Fig. 15A, 15B bis 20A-20C. Bei diesem Ausführungsbeispiel weist die Verschlussvorrichtung 1 ein erstes Verschlussteil 7 auf, das in eine Schließrichtung X an ein zweites Verschlussteil 8 angesetzt werden kann. Das zweite Verschlussteil 8 weist ein Gehäuse 80 mit einer darin eingeformten Eingriffsöffnung 800 auf, in die das erste Verschlussteil 7 mit einem Rastabschnitt 70 in Form eines Verriegelungskopfes eingesetzt werden kann, um mit einem verschiebbar in dem Gehäuse 80 geführten Verriegelungselement 82 zu verriegeln.

Das Verriegelungselement 82 ist entlang einer Öffnungsrichtung O geradlinig verschiebbar in einem Innenraum 801 des Gehäuses 80 angeordnet. Das Gehäuse 80 ist über einen Gehäusedeckel 81 verschlossen, so dass das Verriegelungselement 82 in dem Gehäuse 80 eingefasst und Über Führungsstege 825 an Führungsstegen 811 des Deckels 81 geführt ist.

An dem Gehäuse 80 und dem Gehäusedeckel 81 ist ein Betätigungselement 84 in Form eines Betätigungsknopfes entlang einer Betätigungsrichtung B verschiebbar geführt. An dem Gehäusedeckel 81 ist hierzu ein Führungselement 85 angesetzt und fest mit dem Gehäusedeckel 81 verbunden. Über Führungsstege 841 ist das Betätigungselement 84 in Führungsnuten 851 des Führungselements 85 und in mit den Führungsnuten 851 des Führungselements 85 fluchtenden Führungsnuten 802 im Gehäuse 80 geführt, so dass das Betätigungselement 84 in die Betätigungsrichtung B relativ zu dem Gehäuse 80 verstellt werden kann.

Das Betätigungselement 84 ist durchgreift eine Öffnung 810 des Gehäusedeckels 81. Das Betätigungselement 84 weist an seiner dem Verriegelungselement 82 zugewandten Seite eine durch die Wandungskanten gebildete Schrägfläche 42 auf, die mit Schrägflächen 823 an dem Verriegelungselement 82 zum Bewegen des Verriegelungselements 84 in die Öffnungsrichtung O wechselwirkt, wie nachfolgend noch beschrieben werden soll.

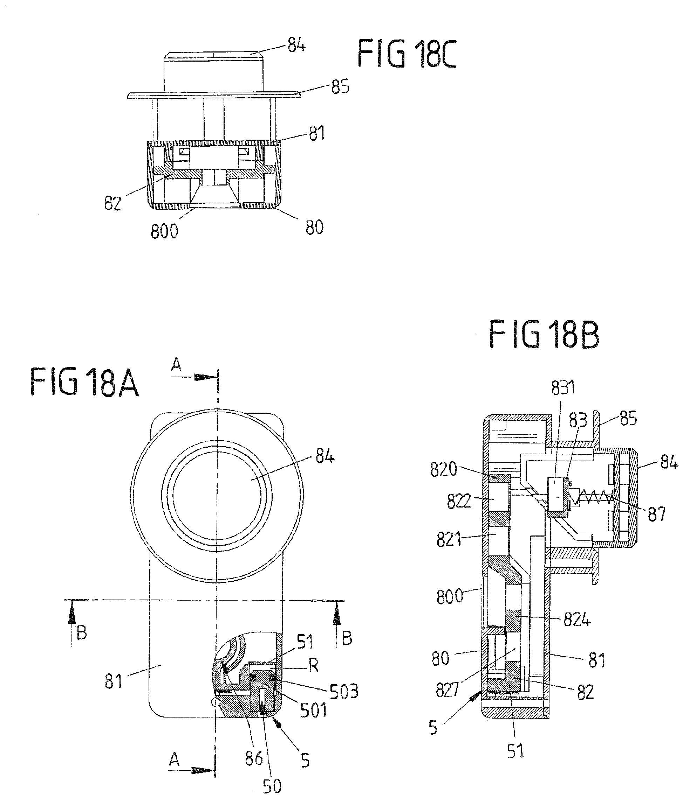

In einer Aussparung 840 des Betätigungselements 84 ist entlang von entlang der Betätigungsrichtung B erstreckten Führungsstegen 843 ein Vorspannelement 83 über Führungsnuten 830 verschieblich geführt. Das Vorspannelement 83 ist über ein als Druckfeder ausgestaltetes Federelement 87 gegenüber dem Betätigungselement 84 vorgespannt (siehe Fig. 18B).

Das Vorspannelement 83 trägt ein Magnetelement 831 in Form eines Permanentmagneten, der mit Magnetelementen 821, 822 an einem Gehäuseabschnitt 820 des Verriegelungselements 82 wechselwirkt. Das Magnetelement 883 steht hierbei dem Magnetelement 821 am Gehäuseabschnitt 820 des Verriegelungselements 82 mit ungleichnamigem Pol gegenüber, während die Magnetelemente 831, 822 mit gleichnamigen Polen aufeinander zuweisen.

An einen axial entlang der Öffnungsrichtung O an den Gehäuseabschnitt 820 anschließenden Gehäuseabschnitt 824 ist ein weiteres Magnetelement 827 angesetzt, das mit einem Magnetelement 71 des ersten Verschlussteils 7 zum Unterstützen des Schließens der Verschlussvorrichtung 1 wechselwirkt.

An dem Gehäuseabschnitt 824 ist zudem eine Verriegelungseinrichtung in Form eines Federverriegelungselements 86 mit elastisch federnden Federarmen 860 angeordnet, die C-förmig zueinander angeordnet sind und zwischen sich eine Öffnung 861 ausbilden derart, dass das Federverriegelungselement 86 entgegen der Öffnungsrichtung O geöffnet ist. In das Federverriegelungselement 86 kann der Verriegelungskopf 70 des ersten Verschlussteils 7 verriegelnd eingreifen, so dass in einer verriegelten Stellung das erste Verschlussteil 7 entgegen der Schließrichtung X formschlüssig an dem Federverriegelungselement 86 gehalten ist, indem die Federarme 860 den Verriegelungskopf 70 zumindest abschnittsweise umfänglich umgreifen und mit geeigneten Rastabschnitten formschlüssig mit dem Verriegelungskopf 70 in Eingriff sind.

Bei dem Ausführungsbeispiel gemäß Fig. 15A, 15B ist eine Verzögerungseinrichtung 5 ausgebildet durch zwei Gehäuseelemente 51 an dem Verriegelungselement 82 und durch Kolbenelemente 50 an einer inneren Wandung des Gehäuses 80. Die Funktionsweise der Verzögerungseinrichtung 5 ist ähnlich wie vorangehend für die ersten beiden Ausführungsbeispiele beschrieben und soll nachfolgend noch erläutert werden.

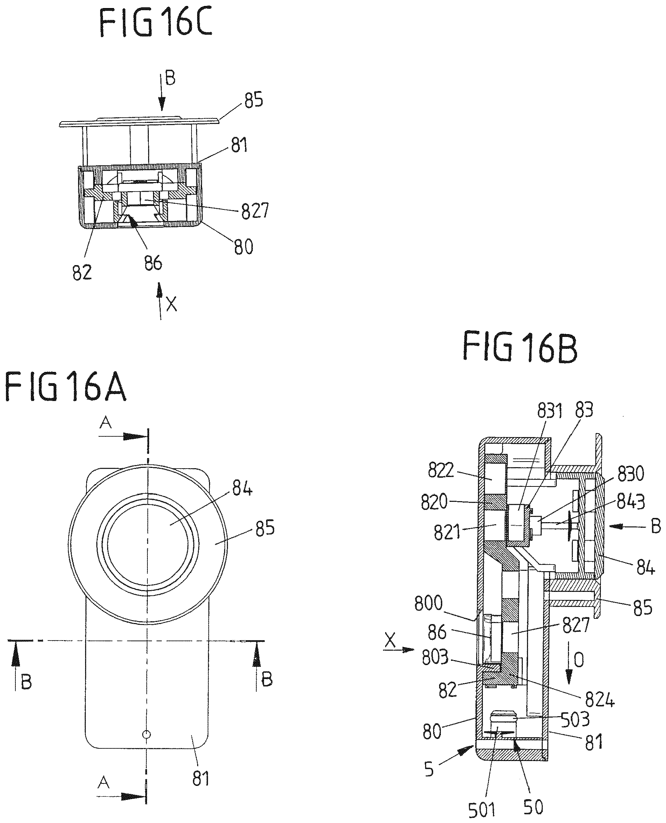

Zum Schließen der Verschlussvorrichtung 1 wird das erste Verschlussteil 7 in die Schließrichtung X in die Eingriffsöffnung 800 am Boden des Gehäuses 80 eingesetzt und gelangt auf diese Weise in Eingriff mit dem Federverriegelungselement 86 des Verriegelungselements 82. Zum Schließen der Verschlussvorrichtung 1 befindet sich das Verriegelungselement 82 hierbei in der in Fig. 16B dargestellten Stellung, in der das Federverriegelungselement 86 in Schließrichtung X gesehen hinter der Eingriffsöffnung 800 angeordnet ist.

Beim Ansetzen gleitet der Verriegelungskopf 70 des ersten Verschlussteils 7 entlang eines Führungsabschnitts 803, der an die Eingriffsöffnung 800 anschließt und sich in den Innenraum 801 des Gehäuses 80 hineinerstreckt (siehe Fig. 16B). Der Führungsabschnitt 803 dient zum Führen des Verriegelungskopfs 70 in Eingriff mit dem Federverriegelungselement 86 des Verriegelungselements 82. Der Führungsabschnitt 803 dient zudem als Anschlag zur Definition der ersten Stellung, die das Verriegelungselement 82 zum Schließen der Verschlussvorrichtung 1 einnimmt.

Beim Ansetzen des ersten Verschlussteils 7 mit dem Verriegelungskopf 70 an das Federverriegelungselement 86 weichen die Federarme 860 in eine Richtung quer zur Schließrichtung X und quer zur Öffnungsrichtung O aus, so dass der Verriegelungskopf 70 mit seinen darin angeordneten Rastabschnitten an den Rastabschnitten der Federarme 860 vorbeibewegt werden kann, bis die Federarme 860 formschlüssig in Eingriff mit dem Verriegelungskopf 70 schnappen und somit die Verriegelung zwischen dem ersten Verschlussteil 7 und dem Verriegelungselement 82 des zweiten Verschlussteils 8 hergestellt ist.

Das Schließen der Verschlussvorrichtung 1 wird magnetisch unterstützt durch die Magnetelement 71, 827 an dem ersten Verschlussteil 2 einerseits und dem Verriegelungselement 82 andererseits, die sich magnetisch anziehend gegenüberstehen und damit eine magnetische Anziehungskraft auf das erste Verschlussteil 7 in Schließrichtung X bewirken.

Beim Schließen befindet sich das Betätigungselement 84 in der in Fig. 16B dargestellten Stellung. In dieser Stellung wird das Betätigungselement 84 durch das Vorspannelement 83 und das das Vorspannelement 83 gegenüber dem Betätigungselement 84 vorspannende Federelement 87 gehalten. Das Vorspannelement 83 liegt in dieser Stellung an dem Gehäuseabschnitt 820 des Verriegelungselements 82 an und wird durch magnetische Anziehung zwischen den Magnetelementen 821, 831 in dieser Stellung gehalten.

Beim Schließen sind die Kolbenelemente 50 der Verzögerungseinrichtung 5 nicht in Eingriff mit den Gehäuseelementen 51. Die Verzögerungseinrichtung 5 hat somit in der Schließstellung keine Wirkung.

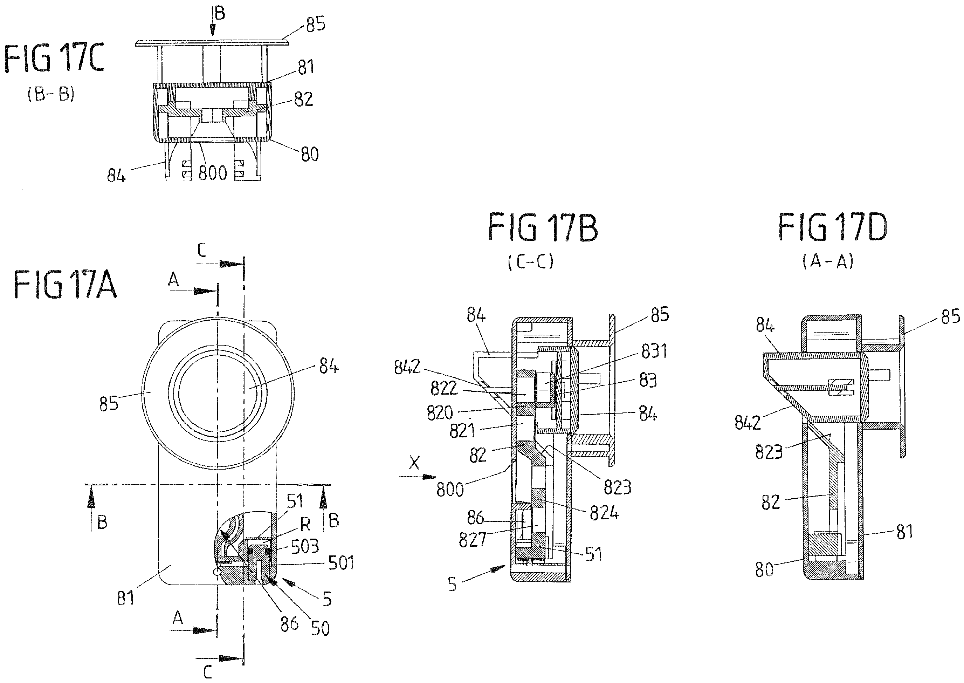

Befindet sich das erste Verschlussteil 7 in Eingriff mit dem Verriegelungselement 82 des zweiten Verschlussteils 8 und soll die Verschlussvorrichtung 1 zum Lösen des ersten Verschlussteils 7 von dem zweiten Verschlussteil 8 geöffnet werden, so wird, wie in Fig. 17B dargestellt, das Betätigungselement 84 - entgegen der vorspannenden Wirkung des Federelements 87 - in die Betätigungsrichtung B verstellt und dazu in das Führungselement 85 hineingedrückt. Dabei liegen die Schrägflächen 842 an dem Betätigungselement 84 auf den Schrägflächen 823 an dem Verriegelungselement 82 auf, so dass aufgrund der schrägen Ausrichtung der Schrägflächen 823, 842 das Verriegelungselement 82 in die Öffnungsrichtung O innerhalb des Gehäuses 80 verstellt wird, wie dies in Fig. 17B dargestellt ist.

Hierdurch wird das erste Verschlussteil 7 mit seinem Verriegelungskopf 70 außer Eingriff mit dem Federverriegelungselement 86 gebracht, indem das Federverriegelungselement 86 zusammen mit dem Verriegelungselement 82 in die Öffnungsrichtung O außer Eingriff mit dem Verriegelungskopf 70 verschoben wird. Das erste Verschlussteil 7 verbleibt hierbei in der Eingriffsöffnung 800 des Gehäuses 80 in Position und gelangt durch die Öffnung 861 zwischen den Federarm 860 außer Eingriff mit dem Federverriegelungselement 86.

Durch Verschieben des Verriegelungselements 82 wird zudem das Magnetelement 827 in die Öffnungsrichtung O relativ zu dem Magnetelement 71 an dem ersten Verschlussteil 7 verschoben, so dass die magnetische Anziehung zwischen den Magnetelementen 71, 827 zumindest abgeschwächt, wenn nicht gar aufgehoben oder umgedreht ist. Hierdurch kann das erste Verschlussteil 7 entgegen der Schließrichtung X in einfacher Weise von dem zweiten Verschlussteil 8 entnommen werden.

Durch Verschieben des Verriegelungselements 82 in die Öffnungsrichtung O verschiebt sich zudem der Gehäuseabschnitt 820 mit den darin angeordneten Magnetelementen 821, 822 in die Öffnungsrichtung O relativ zu dem Vorspannelement 83 mit den daran angeordneten Magnetelement 831 (siehe Fig. 17B). In entriegelter, zweiter Stellung des Verriegelungselements 82 steht das Magnetelement 831 des Vorspannelements 83 somit magnetisch abstoßend dem Magnetelement 822 an dem Gehäuseabschnitt 820 gegenüber, so dass das Vorspannelement 83 und damit auch das Betätigungselement 84 entgegen der Betätigungsrichtung B zurückgestellt wird. Aufgrund der vorspannenden Wirkung des Federelements 87 wird zudem das Betätigungselement 84 (wiederum) von dem Vorspannelement 83 entfernt, so dass sich die in Fig. 18B dargestellte Stellung ergibt, in der das Betätigungselement 84 deutlich sichtbar aus dem Führungselement 85 herausgestellt ist.

Durch das Zurückstellen des Betätigungselements 84 wird ein Rückstellen des Verriegelungselements 82 aus der entriegelten, zweiten Stellung in die der Ausgangslage entsprechende erste Stellung möglich. Hierzu ist das Verriegelungselement 82 beispielsweise elastisch über ein geeignetes Federelement (nicht dargestellt) gegenüber dem Gehäuse 80 vorgespannt, so dass das Federelement eine Rückstellkraft entgegen der Öffnungsrichtung O zum Rückstellen des Verriegelungselements 82 aus der entriegelten, zweiten Stellung in die erste Stellung bewirkt.

Bei Entriegeln des Verriegelungselements 82 sind die Gehäuseelemente 51 am Verriegelungselement 82 in Eingriff mit den Kolbenelementen 50 am Gehäuse 80 gelangt, wie dies in Fig. 17A und 18A dargestellt ist. An einem Schaft 501 der Kolbenelemente 50 sind hierbei Dichtelemente in Form von Dichtringen 503 angeordnet, so dass die Schäfte 501 der Kolbenelemente 50 dichtend in den zugeordneten Gehäuseelementen 51 einliegen und jeweils zusammen mit dem zugeordneten Gehäuseelement 51 einen Raum R einschließen, dessen Volumen in der entriegelten, zweiten Stellung des Verriegelungselements 82 klein ist.

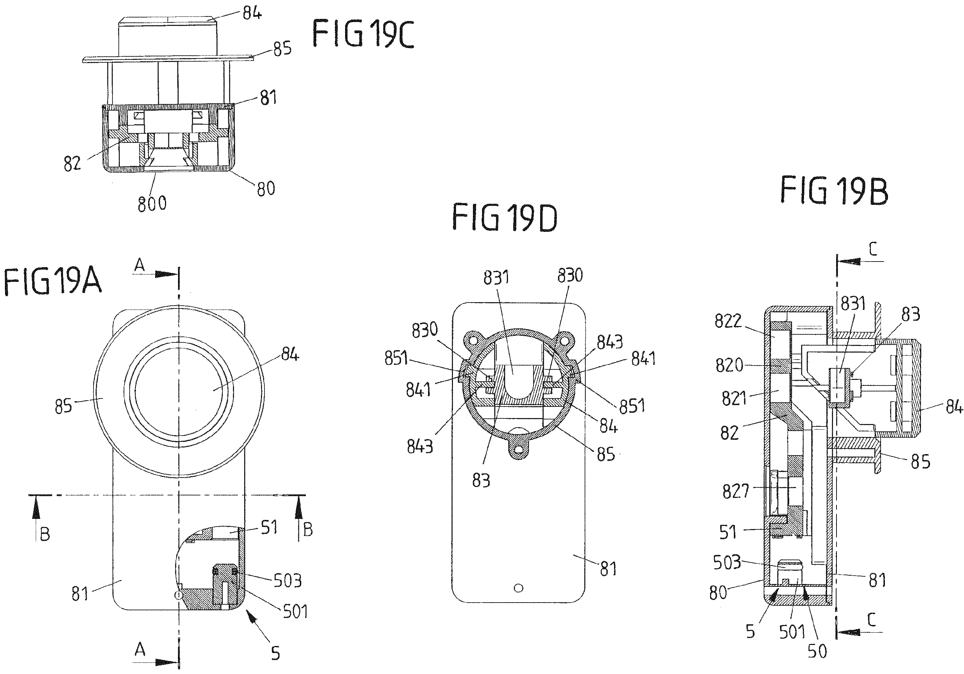

Wird das Verriegelungselement 82 aufgrund der vorspannenden Wirkung des rückstellenden Federelements entgegen der Öffnungsrichtung O aus der entriegelten, zweiten Stellung zurückgestellt, so muss dies gegen die Wirkung der Verzögerungseinrichtung 5 erfolgen. Die Rückstellbewegung wird hierbei durch eine in den Räumen R der Gehäuseelemente 51 erzeugte Unterdruckkraft gebremst, die sich nur in verzögerter Weise durch in die Räume R einströmende Luft abbauen kann. Das Rückstellen des Verriegelungselements 82 in die der Ausgangslage entsprechende erste Stellung (Fig. 19B) erfolgt somit in zeitlich verzögerter Weise, so dass eine Verriegelung der Verschlussvorrichtung 1 erst nach Ablauf einer vorbestimmten Verzögerungszeit möglich ist.

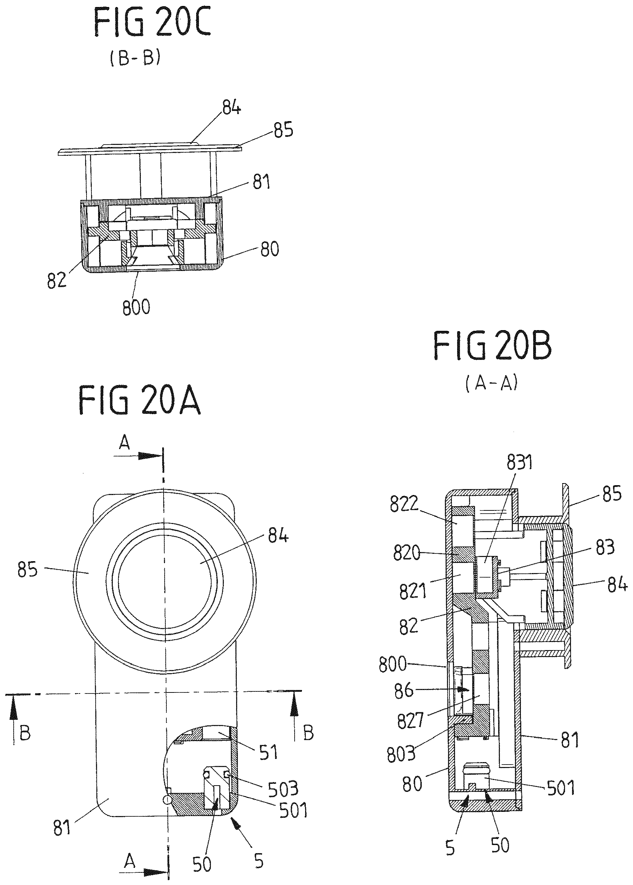

Hat das Verriegelungselement, wie in Fig. 19B dargestellt, seine erste Stellung erreicht, so liegt wiederum das Magnetelement 821 an dem Gehäuseabschnitt 820 des Verriegelungselements 82 dem Magnetelement 831 am Vorspannelement 83 magnetisch anziehend gegenüber, so dass das Vorspannelement 83 und zusammen mit dem Vorspannelement 83 das über das Federelement 87 mit dem Vorspannelement 83 gekoppelte Betätigungselement 84 in die Betätigungsrichtung B hin zum Verriegelungselement 82 gezogen wird, wie dies in Fig. 20B dargestellt ist. Somit ist die Ausgangslage erreicht, in der die Verschlussvorrichtung 1 wieder verriegeln kann, indem das erste Verschlussteil 7 an die Eingriffsöffnung 800 des zweiten Verschlussteils 8 angesetzt wird.

Das aus dem Führungselement 85 herausgestellte Betätigungselement 84 (siehe Fig. 19B) dient auch dazu anzuzeigen, dass das Verriegelungselement 82 (noch) nicht in seine erste Stellung zurückgestellt worden ist und eine Verriegelung der Verschlussvorrichtung 1 somit (noch) nicht möglich oder (noch) nicht erfolgt ist. Das ausgestellte Betätigungselement 84 dient somit auch als Anzeige für einen Zustand, indem eine Verriegelung möglich ist bzw. korrekt erfolgt ist.

Weil die Rückstellung des Verriegelungselements 82 in verzögerter Weise erfolgt und erst nach Ablauf einer vorbestimmten Verzögerungszeit - die durch Dimensionierung der Verzögerungseinrichtung 5 bestimmt ist - abgeschlossen ist, wird möglich, bei Verwendung mehrerer Verschlussvorrichtungen 1 in Kombination die Verschlussvorrichtungen 1 nacheinander zu öffnen, was ohne Weiteres einhändig möglich ist. Weil nach Öffnen einer Verschlussvorrichtung 1 diese in ihrer geöffneten Stellung (zunächst) verbleibt, können nacheinander weitere Verschlussvorrichtungen 1 geöffnet werden, um sodann die über die Verschlussvorrichtungen 1 gekoppelten Gegenstände voneinander zu trennen.

Der der Erfindung zugrunde liegende Gedanke ist nicht auf die vorangehend geschilderten Ausführungsbeispiele beschränkt, sondern lässt sich grundsätzlich auch bei gänzlich anders gearteten Ausführungsformen verwirklichen.

Grundsätzlich kann eine Verschlussvorrichtung der hier beschriebenen Art mit oder ohne die Funktion unterstützende Magnetelemente ausgestaltet sein. Magnetelemente, die das Schließen der Verschlussvorrichtung magnetisch unterstützen, können zwar vorteilhaft sein, sind aber nicht unbedingt erforderlich.

Die Verschlussvorrichtung kann einen gänzlich anders gearteten Aufbau als oben beschrieben aufweisen. Insbesondere können Verschlussvorrichtungen wie beschrieben in der WO 2008/006357 A2, der WO 2008/006354 A2, der WO 2009/092368 A2, der WO 2010/006594 A2, der WO 2008/006356 A2, der WO 2009/010049 A2, der WO 2009/12796 A2, der WO 2014/090926 A1 und der internationalen Anmeldung PCT/EP 2013/060762 zum Einsatz kommen.

Die Verwendung solcher Verschlussvorrichtungen ist vielfältig möglich. Grundsätzlich können Verschlussvorrichtungen der hier beschriebenen Art zum lösbaren Verbinden zweier beliebiger Gegenstände zum Einsatz kommen.

### Bezugszeichenliste

- 1: Verschlussvorrichtung
- 2: Verschlussteil
- 20: Körper
- 21: Rastnase
- 210: Auflaufschräge
- 22: Ausnehmung
- 23: Magnetelement
- 3: Verschlussteil
- 30: Gehäuse
- 31: Eingriffsöffnung
- 310, 311: Führungsabschnitt
- 32: Gelenkachse
- 33: Anschlag
- 34: Gelenkachse
- 35: Anschlag
- 36: Gelenkachse
- 4: Verriegelungselement
- 40: Körper
- 41: Rastnase
- 410: Auflaufschräge
- 42: Ausnehmung
- 43: Griffende
- 44: Gelenkachse
- 45: Steg
- 450: Anlenkstelle
- 46: Federelement
- 460: Windung
- 461, 462: Federbein
- 47: Vorsprung
- 5: Verzögerungseinrichtung
- 50: Kolbenelement
- 500: Anlenkstelle
- 501: Schaft
- 502: Ausnehmung
- 503: Dichtungselement
- 504: Kopf
- 505: Durchflussöffnung
- 51: Gehäuseelement
- 510: Öffnung
- 511: Anlenkstelle
- 512, 513: Kammer
- 514: Boden
- 6: Magnethalteeinrichtung
- 60: Körper
- 61: Haken
- 62: Kopf
- 63: Magnetelement
- 7: Verschlussteil
- 70: Verriegelungskopf
- 8: Verschlussteil
- 80: Gehäuse
- 800: Eingriffsöffnung
- 801: Innenraum
- 802: Führungsnut
- 803: Führungsabschnitt
- 81: Gehäusedeckel
- 810: Öffnung
- 811: Führungssteg
- 82: Verriegelungselement
- 820: Gehäuseabschnitt
- 821, 822: Magnetelement
- 823: Schrägfläche
- 824: Gehäuseabschnitt
- 825: Führungsstege
- 827: Magnetelement
- 83: Vorspannelement
- 830: Führungsnut
- 831: Magnetelement
- 84: Betätigungselement
- 840: Aussparung
- 841: Führungssteg
- 842: Schrägfläche
- 843: Führungssteg
- 85: Führungselement
- 850: Öffnung
- 851: Führungsnut
- 86: Federverriegelungselement
- 860: Federarm
- 861: Öffnung
- 87: Federelement
- A: Ausschnitt
- B: Betätigungsrichtung
- E: Einführrichtung
- O: Öffnungsrichtung
- P: Schwenkrichtung
- R: Raum
- X: Schließrichtung

## Patentansprüche

1. Manuell zu betätigende Verschlussvorrichtung,
mit zwei Verschlussteilen (2, 3), die entlang einer Schließrichtung (X) aneinander ansetzbar, in einer Schließstellung mechanisch miteinander verbunden und durch Lösen der mechanischen Verbindung voneinander lösbar sind,
wobei eines der Verschlussteile (2, 3) ein Gehäuse (30) und ein bewegbar an dem Gehäuse (30) angeordnetes Verriegelungselement (4), das zum Herstellen der mechanischen Verbindung zwischen den Verschlussteilen (2, 3) in der Schließstellung mit dem anderen Verschlussteil (3, 2) in Verbindung steht, aufweist,
wobei das Verriegelungselement (4) in der Schließstellung eine erste Stellung an dem Gehäuse (30) einnimmt, zum Lösen der Verschlussteile (2, 3) voneinander aus der ersten Stellung in eine zweite Stellung manuell bewegbar ist und unter Wirkung einer Rückstellkraft aus der zweiten Stellung in die erste Stellung zurückstellbar ist,
**gekennzeichnet durch**
eine Verzögerungseinrichtung (5), die ausgebildet ist, das Rückstellen des Verriegelungselements (4, 82) aus der zweiten Stellung in die erste Stellung bei einer wirkenden Rückstellkraft derart zu verzögern, dass das Verriegelungselement (4, 82) erst nach Ablauf einer vorbestimmten Verzögerungszeit zurück in die erste Stellung gelangt, wobei die Verschlussteile (2, 3; 7,8) jeweils mindestens ein Magnetelement (23, 63; 71, 827) aufweisen, wobei die Magnetelemente (23, 63; 71, 827) das Ansetzen der Verschlussteile (2, 3; 7,8) zum Schließen der Verschlussvorrichtung (1) magnetisch unterstützen..

2. Verschlussvorrichtung nach Anspruch 1, **dadurch gekennzeichnet, dass** die Verzögerungseinrichtung (5) derart ausgebildet ist, dass das Verriegelungselement (4; 82) nach Verstellen aus der ersten Stellung selbsttätig in die erste Stellung zurückgestellt wird und erst nach Ablauf der Verzögerungszeit die erste Stellung erreicht.

3. Verschlussvorrichtung nach Anspruch 1 oder 2, **dadurch gekennzeichnet, dass** die Verzögerungseinrichtung (5) pneumatisch, hydraulisch, elektrisch oder elektromagnetisch wirkt.

4. Verschlussvorrichtung nach einem der Ansprüche 1 bis 3, **dadurch gekennzeichnet, dass** die Verzögerungseinrichtung (5) ein erstes Bauteil (50) und ein zweites Bauteil (51) aufweist, die relativ zueinander verstellbar sind und zusammen zumindest in der zweiten Stellung des Verriegelungselements (4; 82) einen Raum (R) einschließen.

5. Verschlussvorrichtung nach Anspruch 4, **dadurch gekennzeichnet, dass** sich der Raum (R) bei Rückstellen des Verriegelungselements (4; 82) aus der zweiten Stellung in Richtung der ersten Stellung vergrößert, so dass eine Unterdruckkraft zum Verzögern der Rückstellbewegung bewirkt wird.

6. Verschlussvorrichtung nach einem der vorangehenden Ansprüche, **gekennzeichnet durch** eine zwischen dem Gehäuse (30; 80) und dem Verriegelungselement (4; 82) wirkende Rückstelleinrichtung (46) zum Bereitstellen einer Rückstellkraft zum Rückstellen des Verriegelungselements (4; 82) aus der zweiten Stellung in Richtung der ersten Stellung.

7. Verschlussvorrichtung nach einem der vorangehenden Ansprüche, **dadurch gekennzeichnet, dass** das Gehäuse (30; 80) eine Eingriffsöffnung (31; 800), in die das andere der Verschlussteile (2, 3; 7, 8) mit einem Rastabschnitt (21; 70) einsetzbar ist, und mindestens einen entlang der Schließrichtung (X) erstreckten, an die Eingriffsöffnung (31; 800) anschließenden Führungsabschnitt (310, 311; 803) zum Führen des Rastabschnitts (21; 70) des anderen der Verschlussteile (2, 3; 7, 8) in die Schließstellung aufweist.

8. Verschlussvorrichtung nach einem der vorangehenden Ansprüche, **dadurch gekennzeichnet, dass** das Verriegelungselement (4; 82) einen Rastabschnitt (41; 86) zum rastenden Verriegeln mit dem anderen der Verschlussteile (2, 3; 7, 8) aufweist, wobei der Rastabschnitt (86) insbesondere elastisch federnd zu einem Gehäuseabschnitt (824) des Verriegelungselements (82) angeordnet ist.

9. Verschlussvorrichtung nach einem der Ansprüche 1 bis 8, **dadurch gekennzeichnet, dass** das Verriegelungselement (4) verschwenkbar an dem Gehäuse (30) gelagert ist, wobei das Verriegelungselement (4) um eine quer zur Schließrichtung gerichtete Achse (32) oder um eine parallel zur Schließrichtung gerichtete Achse relativ zu dem Gehäuse (30) verschwenkbar ist.

10. Verschlussvorrichtung nach einem der Ansprüche 1 bis 8, **dadurch gekennzeichnet, dass** das Verriegelungselement (82) verschiebbar an dem Gehäuse (80) angeordnet ist.

11. Verschlussvorrichtung nach einem der vorangehenden Ansprüche, **gekennzeichnet durch** ein entlang einer Betätigungsrichtung (B) verstellbar an dem Gehäuse (30; 80) angeordnetes Betätigungselement (84), das ausgebildet ist, bei Betätigung zum Bewegen des Verriegelungselements (4; 82) aus der ersten Stellung auf das Verriegelungselement (4; 82) einzuwirken.

12. Verschlussvorrichtung nach Anspruch 11, **dadurch gekennzeichnet, dass** das Betätigungselement (84) eine schräg zur Betätigungsrichtung (B) gerichtete Schrägfläche (842) aufweist, die ausgebildet ist, bei Betätigung des Betätigungselements (84) auf eine zugeordnete Schrägfläche (823) des Verriegelungselements (4; 82) aufzulaufen und dadurch das Verriegelungselement (4; 84) aus der ersten Stellung zu verstellen.

13. Verschlussvorrichtung nach Anspruch 11 oder 12, **gekennzeichnet durch** ein Vorspannelement (83), das entlang der Betätigungsrichtung (B) verstellbar an dem Betätigungselement (84) geführt und gegenüber dem Betätigungselement (84) elastisch vorgespannt ist, wobei das Vorspannelement (83) vorzugsweise ein erstes Magnetelement (831) aufweist, das in der ersten Stellung des Verriegelungselements (82) einem zweiten Magnetelement (821) des Verriegelungselements (82) magnetisch anziehend gegenübersteht.

14. Verschlussvorrichtung nach Anspruch 13, **dadurch gekennzeichnet, dass** das erste Magnetelement (831) des Vorspannelements (83) in der zweiten Stellung des Verriegelungselements (82) einem dritten Magnetelement (822) des Verriegelungselements (82) magnetisch abstoßend gegenübersteht.

15. Verschlussvorrichtung nach Anspruch 14, **dadurch gekennzeichnet, dass** das Betätigungselement (84) aus einer Ausgangslage in die Betätigungsrichtung (B) zum Verstellen des Verriegelungselements (82) aus der ersten Stellung in die zweite Stellung verstellbar ist, wobei aufgrund der magnetisch abstoßenden Wechselwirkung des ersten Magnetelements (831) des Vorspannelements (83) mit dem dritten Magnetelement (822) des Verriegelungselements (82) das Betätigungselement (84) nach dem Verstellen des Verriegelungselements (82) in die zweite Stellung über die Ausgangslage hinaus entgegen der Betätigungsrichtung (B) verstellt und nach zeitverzögertem Rückstellen des Verriegelungselements (82) in die erste Stellung wiederum in die Ausgangslage gebracht wird.

## Claims

1. A hand-actuated closing device,
having two closing parts (2, 3) which are fittable together along a closing direction (X), are mechanically interconnected in a closed position and are releasable from one another as by releasing the mechanical connection,
wherein one of the closure parts (2, 3) comprises a housing (30) and a locking element (4) which is arranged so as to be movable on the housing (30) and is in connection with the other closure part (3, 2) in the closed position to produce the mechanical connection between the closure parts (2, 3),
wherein in the closed position, the locking part (4) assumes a first position on the housing (30), is manually movable from the first position into a second position to release the closure parts (2, 3) and is resettable from the second position into the first position under the action of a resetting force,
**characterized by**
a delaying system (5) which is constituted to delay the resetting of the locking element (4, 82) from the second position into the first position under the effect of a resetting force in such a manner that the locking element (4, 82) moves back into the first position only after lapse of a predetermined delay time has elapsed, wherein the closure parts (2, 3; 7, 8) comprise in each case at least one magnetic element (23, 63; 71, 827), wherein the magnetic elements (23, 63; 71, 827) support the fitting of the closure parts (2, 3; 7, 8) in a magnetic manner for closing the closure device (1).

2. The closure device as claimed in claim 1, **characterized in that** the delaying system (5) is constituted in such a manner that the locking element (4; 82) is automatically reset into the first position after being moved out of the first position and reaches the first position only after lapse of a predetermined delay time.

3. The closure device as claimed in claim 1 or 2, **characterized in that** the delaying system (5) operates in a pneumatic, hydraulic, electric or electro-magnetic manner.

4. The closure device as claimed in one of claims 1 to 3, **characterized in that** the delaying system (5) comprises a first component (50) and a second component (51) which are adjustable relative to one another and together enclose a space (R) at least in the second position of the locking element (4; 82).

5. The closure device as claimed in claim 4, **characterized in that** the space (R) increases in size when the locking element (4; 82) is reset out of the second position in the direction of the first position such that a negative pressure force is brought about to delay the resetting movement.

6. The closure device as claimed in one of the preceding claims, **characterized by** a resetting device (46) which acts between the housing (30; 80) and the locking element (4; 82) for providing a resetting force for resetting the locking element (4; 82) out of the second position in the direction of the first position.

7. The closure device as claimed in one of the preceding claims, **characterized in that** the housing (30; 80) comprises an engagement opening (31; 800), into which the other of the closure parts (2, 3; 7, 8) is insertable with a latching portion (21; 70), and at least one guide portion (310, 311; 803) which extends along the closing direction (X) and connects to the engagement opening (31; 800) for guiding the latching portion (21; 70) of the other of the closure parts (2, 3; 7, 8) into the closed position.

8. The closure device as claimed in one of the preceding claims, **characterized in that** the locking element (4; 82) comprises a latching portion (41; 86) for locking in a latching manner with the other of the closure parts (2, 3; 7, 8), wherein the latching portion (86) is in particular arranged in a resiliently springy manner in relation to a housing portion (824) of the locking element (82).

9. The closure device as claimed in one of claims 1 to 8, **characterized in that** the locking element (4) is mounted so as to be pivotable on the housing (30), wherein the locking element (4) is pivotable relative to the housing (30) about an axis (32) that is directed transversely with respect to the closing direction or about an axis that is directed parallel to the closing direction.

10. The closure device as claimed in one of claims 1 to 8, **characterized in that** the locking element (82) is arranged so as to be displaceable on the housing (80).

11. The closure device as claimed in one of the preceding claims, **characterized by** an actuating element (84) which is arranged on the housing (30; 80) so as to be adjustable along an actuating direction (B) and is constituted to act on the locking element (4; 82) during actuation for moving the locking element (4; 82) out of the first position.

12. The closure device as claimed in claim 11, **characterized in that** the actuating element (84) comprises a slanting surface (842) which is directed at an angle to the actuating direction (B) and is constituted to run up onto an associated slanting surface (823) of the locking element (4; 82) when the actuating element (84) is actuated and as a result adjust the locking element (4; 84) out of the first position.

13. The closure device as claimed in one of claims 11 or 12, **characterized by** a preload element (83) which is guided along the actuating direction (B) so as to be adjustable and is preloaded in a resilient manner in relation to the actuating element (84), wherein the preload element (83) preferably comprises a first magnetic element (831) which, in the first position of the locking element (82), faces a second magnetic element (821) of the locking element (82) in a magnetically attracting manner.

14. The closure device as claimed in claim 13, **characterized in that** the first magnetic element (831) of the preload element (83) in the second position of the locking element (82) faces a third magnetic element (822) of the locking element (82) in a magnetically repelling manner.

15. The closure device as claimed in claim 14, **characterized in that** the actuating element (84) is adjustable out of the starting position in the actuating direction (B) for adjusting the locking element (82) out of the first position into the second position, wherein on account of the magnetically repelling interaction between the first magnetic element (831) of the preload element (83) and the third magnetic element (822) of the locking element (82), the actuating element (84), after the adjusting of the locking element (82) into the second position, is adjusted beyond the starting position in opposition to the actuating direction (B) and after a time-delayed resetting of the locking element (82) into the first position is moved once again into the starting position.

## Revendications

1. Dispositif de fermeture à actionnement manuel,
avec deux parties de fermeture (2, 3) qui peuvent être appliquées l'une contre l'autre le long d'une direction de fermeture (X), sont reliées mécaniquement l'une à l'autre dans une position de fermeture et peuvent être libérées l'une de l'autre par libération de la liaison mécanique,
dans lequel une des parties de fermeture (2, 3) présente un boîtier (30) et un élément de verrouillage (4) qui est agencé mobile sur le boîtier (30) et qui, pour établir la liaison mécanique entre les parties de fermeture (2, 3), est en liaison avec l'autre partie de fermeture (3, 2) dans la position de fermeture,
dans lequel l'élément de verrouillage (4), dans la position de fermeture, prend une première position contre le boîtier (30), peut être déplacé manuellement dans une seconde position depuis la première position pour libérer l'une de l'autre les parties de fermeture (2, 3) et, sous l'action d'une force de rappel, peut être ramené de la seconde position à la première position,
**caractérisé par**
un dispositif de temporisation (5) qui est conçu pour retarder le retour de l'élément de verrouillage (4, 82) de la seconde position à la première position en cas d'action d'une force de rappel de telle sorte que l'élément de verrouillage (4, 82) n'atteint de nouveau la première position qu'après écoulement d'un temps de temporisation prédéterminé, dans lequel les parties de fermeture (2, 3 ; 7,8) présentent respectivement au moins un élément magnétique (23, 63 ; 71, 827), dans lequel les éléments magnétiques (23, 63 ; 71, 827) soutiennent magnétiquement l'application des parties de fermeture (2, 3 ; 7,8) en vue de la fermeture du dispositif de fermeture (1).

2. Dispositif de fermeture selon la revendication 1, **caractérisé en ce que** le dispositif de temporisation (5) est conçu de telle sorte que l'élément de verrouillage (4 ; 82), après son déplacement de la première position, est automatiquement ramené à la première position et n'atteint la première position qu'après écoulement du temps de temporisation.

3. Dispositif de fermeture selon la revendication 1 ou 2, **caractérisé en ce que** le dispositif de temporisation (5) agit de manière pneumatique, hydraulique, électrique ou électromagnétique.

4. Dispositif de fermeture selon l'une des revendications 1 à 3, **caractérisé en ce que** le dispositif de temporisation (5) présente un premier composant (50) et un second composant (51) qui peuvent être déplacés l'un par rapport à l'autre et qui entourent ensemble un espace (R) au moins dans la seconde position de l'élément de verrouillage (4 ; 82).

5. Dispositif de fermeture selon la revendication 4, **caractérisé en ce que** l'espace (R) augmente lors du retour de l'élément de verrouillage (4 ; 82) depuis la seconde position en direction de la première position, de sorte qu'une force de vide est appliquée pour retarder le mouvement de rappel.

6. Dispositif de fermeture selon l'une des revendications précédentes, **caractérisé par** un dispositif de rappel (46) agissant entre le boîtier (30 ; 80) et l'élément de verrouillage (4 ; 82) pour la fourniture d'une force de rappel en vue du retour de l'élément de verrouillage (4 ; 82) depuis la seconde position en direction de la première position.

7. Dispositif de fermeture selon l'une des revendications précédentes, **caractérisé en ce que** le boîtier (30 ; 80) présente une ouverture d'engagement (31 ; 800) dans laquelle peut être insérée l'autre des parties de fermeture (2, 3 ; 7, 8) avec une section d'encliquetage (21 ; 70), et au moins une section de guidage (310, 311 ; 803) qui s'étend le long de la direction de fermeture (X) et adjacente à l'ouverture d'engagement (31 ; 800) pour guider la section d'encliquetage (21 ; 70) de l'autre des parties de fermeture (2, 3 ; 7, 8) dans la position de fermeture.

8. Dispositif de fermeture selon l'une des revendications précédentes, **caractérisé en ce que** l'élément de verrouillage (4 ; 82) présente une section d'encliquetage (41 ; 86) en vue du verrouillage par encliquetage avec l'autre des parties de fermeture (2, 3 ; 7, 8), dans lequel la section d'encliquetage (86) est agencée en particulier de manière élastique par rapport à une section de boîtier (824) de l'élément de verrouillage (82).

9. Dispositif de fermeture selon l'une des revendications 1 à 8, **caractérisé en ce que** l'élément de verrouillage (4) est monté pivotant sur le boîtier (30), dans lequel l'élément de verrouillage (4) peut pivoter par rapport au boîtier (30) autour d'un axe (32) orienté transversalement à la direction de fermeture ou autour d'un axe orienté parallèlement à la direction de fermeture.

10. Dispositif de fermeture selon l'une des revendications 1 à 8, **caractérisé en ce que** l'élément de verrouillage (82) est agencé de manière à pouvoir coulisser sur le boîtier (80).

11. Dispositif de fermeture selon l'une des revendications précédentes, **caractérisé par** un élément d'actionnement (84) qui est agencé de manière déplaçable sur le boîtier (30 ; 80) le long d'une direction d'actionnement (B) et qui est conçu pour, lors de son actionnement, agir sur l'élément de verrouillage (4 ; 82) en vue de déplacer l'élément de verrouillage (4 ; 82) depuis la première position.

12. Dispositif de fermeture selon la revendication 11, **caractérisé en ce que** l'élément d'actionnement (84) présente une surface oblique (842) orientée de manière oblique par rapport à la direction d'actionnement (B), qui est conçue pour, lors de l'actionnement de l'élément d'actionnement (84), parcourir une surface oblique (823) associée de l'élément de verrouillage (4 ; 82) et pour déplacer ainsi l'élément de verrouillage (4 ; 84) depuis la première position.

13. Dispositif de fermeture selon la revendication 11 ou 12, **caractérisé par** un élément de précontrainte (83) qui est guidé de manière déplaçable sur l'élément d'actionnement (84) le long de la direction d'actionnement (B) et est précontraint élastiquement par rapport à l'élément d'actionnement (84), dans lequel l'élément de précontrainte (83) présente de préférence un premier élément magnétique (831) qui, dans la première position de l'élément de verrouillage (82), est placé de manière magnétiquement attirante en face d'un second élément magnétique (821) de l'élément de verrouillage (82).

14. Dispositif de fermeture selon la revendication 13, **caractérisé en ce que** le premier élément magnétique (831) de l'élément de précontrainte (83), dans la seconde position de l'élément de verrouillage (82), est placé de manière magnétiquement repoussante en face d'un troisième élément magnétique (822) de l'élément de verrouillage (82).

15. Dispositif de fermeture selon la revendication 14, **caractérisé en ce que** l'élément d'actionnement (84) est déplaçable depuis une position de départ dans la direction d'actionnement (B) en vue de déplacer l'élément de verrouillage (82) de la première position à la seconde position, dans lequel, en raison de l'interaction magnétiquement repoussante du premier élément magnétique (831) de l'élément de précontrainte (83) avec le troisième élément magnétique (822) de l'élément de verrouillage (82), l'élément d'actionnement (84), après le déplacement de l'élément de verrouillage (82) dans la seconde position, est déplacé au-delà de la position de départ contre la direction d'actionnement (B) et, après retour différé de l'élément de verrouillage (82) dans la première position, est ramené de nouveau à la position de départ.
